# EUROPÄISCHE PATENTSCHRIFT

(11) **EP 3 265 962 B1**
(45) Veröffentlichungstag und Bekanntmachung des Hinweises auf die Patenterteilung: **06.12.2023**
(21) Anmeldenummer: 16706844.4
(22) Anmeldetag: 25.02.2016
(51) Int. Cl.: G06K 19/073, G06K 19/077

(54) **WERT- ODER SICHERHEITSDOKUMENT MIT EINER ELEKTRONISCHEN SCHALTUNG UND VERFAHREN ZUM HERSTELLEN DES WERT- ODER SICHERHEITSDOKUMENTS**
VALUE OR SECURITY DOCUMENT COMPRISING AN ELECTRONIC CIRCUIT, AND METHOD FOR PRODUCING A VALUE OR SECURITY DOCUMENT
DOCUMENT DE VALEUR OU DE SÉCURITÉ POURVU D'UN CIRCUIT ÉLECTRONIQUE ET PROCÉDÉ DE FABRICATION DE CE DOCUMENT DE VALEUR OU DE SÉCURITÉ

(30) Priorität: 05.03.2015 DE 102015204018
(43) Veröffentlichungstag der Anmeldung: 10.01.2018
(73) Patentinhaber: Bundesdruckerei GmbH, 10969 Berlin (DE)
(72) Erfinder: FISCHER, Jörg, 13053 Berlin (DE); TRÖLENBERG, Stefan, 15749 Mittenwalde OT Ragow (DE); TIETKE, Markus, 12439 Berlin (DE); HILLE, Jakob, 10247 Berlin (DE); FRITZE, Frank, 12437 Berlin (DE); DRESSEL, Olaf, 14641 Wustermark (DE); PAESCHKE, Manfred, 16348 Wandlitz (DE)
(74) Vertreter: Patentanwälte Bressel und Partner mbB
(86) Internationale Anmeldenummer: PCT/EP2016/053931
(87) Internationale Veröffentlichungsnummer: WO 2016/139114

(56) Entgegenhaltungen:
- DE-A1-102013 102 003
- DE-T2- 69 529 967
- US-A1- 2014 263 663

## Beschreibung

### Gebiet der Erfindung:

Die vorliegende Erfindung betrifft ein Wert- oder Sicherheitsdokument, insbesondere ein Identifikationsdokument (ID-Dokument), beispielsweise eine Identifikationskarte (ID-Karte), mit einer elektronischen Schaltung sowie ein Verfahren zum Herstellen des Wert- oder Sicherheitsdokuments. Insbesondere betrifft die vorliegende Erfindung eine ID-Karte mit einem biometrischen Sensor, insbesondere einer Fingerabdruckscan-Vorrichtung, mit einer elektronischen Anzeige sowie mit einer RFID-Schaltung.

### Stand der Technik und Hintergrund der Erfindung:

Sicherheits- oder Wertdokumente dienen beispielsweise zur Identifikation von Personen und/oder Gegenständen und/oder zum bargeldlosen Zahlungsverkehr. Sie weisen unter anderem visuell erkennbare Merkmale auf, die sie eindeutig einer Person und/oder einem Gegenstand und/oder einem Geld- oder Wertpapierkonto zuordnen und die nur dem Dokumenteninhaber erlauben, sich auszuweisen bzw. über den Gegenstand bzw. das Konto zu verfügen und beispielsweise Geldtransfers zu veranlassen. Aus diesem Grunde müssen diese Dokumente gegen Missbrauch geschützt werden. Hierzu können sie beispielsweise einen Fingerabdrucksensor und eine Anzeigevorrichtung aufweisen, über die sich der Benutzer für den Gebrauch der Karte authentifizieren kann.

Üblicherweise werden ID-Dokumente aus Kunststoffmaterialien hergestellt, um deren notwendige Flexibilität zu gewährleisten. Häufig werden Wert- oder Sicherheitsdokumente durch eine Lamination einer Mehrzahl teilweise graphisch gestalteter Polymerfolien, beispielsweise von Polycarbonatfolien, in einer Heiß/Kalt-Laminierpresse im Bogen-Mehrfachformat oder auch in einem Durchlauf-Laminierverfahren mit mehreren hintereinander angeordneten Heiz- und Kühl-Press-Stationen hergestellt. In den Dokumenten enthaltene elektronische Bauteile sind üblicherweise auf einer Schaltungsträgerlage montiert, die zusammen mit weiteren Dokumentenlagen zu dem Laminat verbunden werden.

Hierzu geht beispielsweise aus DE 10 2013 102 003 A1 eine Chipkarte mit integrierten aktiven Komponenten hervor, die einen Chipkartenmodulträger sowie eine Verdrahtungsstruktur, einen integrierten Schaltkreis und eine Leuchtvorrichtung, welche sämtlich auf dem Chipkartenmodulträger angeordnet sind, aufweist, wobei der integrierte Schaltkreis, die Chipkartenmodulantenne und die Leuchtvorrichtung mit der elektrischen Verdrahtungsstruktur elektrisch gekoppelt sind. Gemäß einer der in dieser Druckschrift beschriebenen Ausführungsformen kann der Träger beispielsweise aus Epoxidharz, Polyimid oder FR4 (mit Epoxidharz getränkte Glasfasermatte) bestehen.

In DE 10 2012 223 472 A1 ist ein Wert- und/oder Sicherheitsdokument beschrieben, das eine Antennenstruktur aufweist. Zur Herstellung des Dokuments wird die Antennenstruktur auf einen Trägerkörper, die als Kunststofflage beispielsweise aus Polyimid ausgebildet sein kann, aufgebracht. Ferner kann auf dem Trägerkörper auch ein elektronisches Bauelement angeordnet sein, beispielsweise ein Halbleiterbauelement. Des Weiteren können auch Submodule als Chipträger, basierend auf flexiblen Leiterplatten (Interposa), zum Beispiel aus Polyimid oder FR4 verwendet werden.

In DE 10 2011 050 794 A1 ist ein Sicherheits- oder Wertdokument angegeben, das mindestens einen Kartenkörper aus mehreren Lagen und zumindest ein Displaymodul umfasst. Das Displaymodul weist eine Chip-Substratlage auf, die beispielsweise aus Epoxidharz oder Polyimid gebildet ist.

Die DE 695 29 967 T2 beschreibt eine IC-Karte vom kontaktlosen Typ und ein Verfahren und eine Vorrichtung zu deren Herstellung, die mit geringen Kosten mit geringer Dicke hergestellt werden kann und in ihrem Herstellungsprozess automatisiert und arbeitssparend ist. Elektronische Teile sind auf einer Schaltungsmustervorrichtung montiert, die ein Schaltungsmuster enthält, das auf der anderen Oberfläche einer Folie aus einem Harz vorgesehen ist, deren eine Oberfläche eine äußere Hülle einer IC-Karte definiert. Ein Kunststoffmaterial wird auf das Schaltungsmuster und die elektronischen Teile auf die andere Oberfläche des Blatts gelegt. Dieser wird mittels einer Presse plastisch verformt, um einen integrierten plattenartigen Körper zu bilden, der in die Form einer Karte geschnitten werden kann, um eine kontaktlose IC-Karte mit geringer Dicke zu erhalten.

Die DE 10 2013 102 718 A1 beschreibt eine Chipkartenmodulanordnung, die einen Träger, in dem eine Vertiefung ausgebildet ist, ein Chipkartenmodul, das in der Vertiefung angeordnet ist, und eine Chipkartenantenne umfasst. Die Chipkartenantenne kann kontaktlos mit dem Chipkartenmodul gekoppelt werden.

### Der Erfindung zugrunde liegende Aufgaben:

Es hat sich herausgestellt, dass die bekannten durch Laminieren hergestellten Dokumente den Nachteil haben, dass die Stabilität der Dokumente mit einer elektronischen Schaltung bei deren Benutzung nicht ausreichend ist, insbesondere wenn die Dokumente Anzeigevorrichtungen und andere exponierte Schaltungsbauteile aufweisen. Des Weiteren ist auch nicht in allen Fällen gewährleistet, dass die elektronischen Bauteile und deren elektrische Verbindungen auf einem Schaltungsträger in genügendem Umfange gegen mechanische Schädigungen geschützt sind.

Von daher liegt der vorliegenden Erfindung die Aufgabe zugrunde, die Nachteile der bekannten Wert- oder Sicherheitsdokumente zu überwinden und insbesondere Dokumente mit erhöhter mechanischer Stabilität, vor allen Dingen gegen Biegebeanspruchung, bereitzustellen. Diese Dokumente sollen auch bei längerer Benutzung dimensionsstabil bleiben und hierzu die notwendige hohe Steifigkeit, insbesondere Verwindungssteifheit, und Robustheit haben, um die in den Dokumenten enthaltenen elektronischen Bauelemente beispielsweise gegen Bruch und An- oder Abriss an den elektrischen Kontaktstellen zu schützen. Die bisher verwendeten Polymermaterialien, die zur Herstellung beispielsweise von Smartcards verwendet werden, erfüllen diese Anforderungen nicht. Des Weiteren soll ein Aufbau für Wert- oder Sicherheitsdokumente in Form von multifunktionellen Smartcards gefunden werden, der einer im Entwurf befindlichen Norm ISO/DIS 18328-2 mit einer Kartendicke von 2,5 mm entspricht. Das Dokument soll auch gegen Delaminieren geschützt sein. Ferner soll die Herstellung des Wert- oder Sicherheitsdokuments einfach und kostengünstig sein.

Die Erfindung wird durch ein Wert- oder Sicherheitsdokument mit den Merkmalen des Patentanspruch1 und ein Verfahren mit den Merkmalen des Patentanspruchs 10 gelöst. vorteilhafte Ausgestaltungen der Erfindung ergeben sich aus den Unteransprüchen.

### Definitionen:

Soweit nachfolgend jeweils Begriffe in der Singularform verwendet werden, beispielsweise 'elektronische Schaltung', 'Dokumentenlage', elektronisches Halbleiterbauelement', 'Durchbrechung' usw., so können darunter jeweils auch die entsprechenden Pluralformen zu verstehen sein, nämlich elektronische Schaltungen', 'Dokumentenlagen', elektronische Halbleiterbauelemente', 'Durchbrechungen' usw., und umgekehrt, sofern nicht ausdrücklich etwas anderes angegeben ist.

Soweit in der Beschreibung und in den Ansprüchen der vorliegenden Anmeldung der Begriff 'Wert- oder Sicherheitsdokument' verwendet wird, ist darunter beispielsweise ein Personalausweis, Führerschein, ein Zugangskontrollausweis oder ein anderes ID-Dokumente, beispielsweise ID-Karte, ein Fahrzeugschein, eine Scheck-, Bank-, Kredit- oder Barzahlungskarte, Kundenkarte, Gesundheitskarte, ein Firmenausweis, Berechtigungsnachweis, Mitgliedsausweis, Geschenk- oder Einkaufsgutschein oder ein sonstiger Berechtigungsnachweis oder noch ein anderes Dokument zu verstehen. Das Wertoder Sicherheitsdokument ist insbesondere eine Smartcard, wenn das Dokument in Kartenform vorliegt. Das Wert- oder Sicherheitsdokument kann im Format ID-1, ID-2, ID-3 oder in irgendeinem anderen normierten oder nicht normierten Format vorliegen, beispielsweise in Kartenform. Vorzugsweise ist das Format des Dokuments ID-1. Das Wertoder Sicherheitsdokumentsoll den normierten Anforderungen genügen, beispielsweise gemäß ISO 10373, ISO/IEC 7810, ISO 14443 sowie gegebenenfalls der noch im Entwurf befindlichen Norm ISO/DIS 18328-2.

Soweit in der Beschreibung und in den Ansprüchen der vorliegenden Anmeldung die Begriffe 'elektronisches Halbleiterbauelement' oder 'IC' verwendet werden, sind darunter beispielsweise ein ungehäuster Halbleiterchip (bare die) oder ein gehäuster Halbleiterchip, beispielsweise in Form eines Surface Mount Device (SMD), eines Chip Scale Package (CSP) oder einer der folgenden Bauformen: DIP, TQFP, MLF, SOTP, SOT, PLCC, QFN, SSOT, BGA, MOB, oder eines Chipmoduls zu verstehen. Falls der Chip ungehäust ist, kann er gedünnt eingesetzt werden.

### Grundzüge der Erfindung und bevorzugte Ausführungsformen:

Gemäß einem ersten Aspekt der vorliegenden Erfindung werden die vorstehenden Aufgaben mit einem Wert- oder Sicherheitsdokument, insbesondere mit einem ID-Dokument und ganz besonders mit einer ID-Karte, die eine elektronische Schaltung aufweist, gelöst.

Gemäß einem zweiten Aspekt der vorliegenden Erfindung werden die vorstehenden Aufgaben auch mit einem Verfahren zum Herstellen des die elektronische Schaltung aufweisenden Wert- oder Sicherheitsdokuments gelöst.

Das erfindungsgemäße Wert- oder Sicherheitsdokument, das die elektronische Schaltung aufweist, ist aus mindestens zwei in einem Stapel angeordneten und mit einem Fügeverfahren miteinander verbundenen Dokumentenlagen gebildet. Der Stapel ist durch eine Stützstrukturlage und eine die elektronische Schaltung tragende Schaltungsträgerlage gebildet. Die Stützstrukturlage ist aus einem Faserverbundwerkstoff gebildet, der vorzugsweise nicht schmelzbar ist.

Zur Herstellung des erfindungsgemäßen Wert- oder Sicherheitsdokuments dient ein Verfahren, das die folgenden Verfahrensschritte umfasst:
(a) Bereitstellen der Stützstrukturlage und der Schaltungsträgerlage;
(b) Aufeinanderstapeln der Stützstrukturlage und der die elektronische Schaltung tragenden Schaltungsträgerlage, wobei die Stützstrukturlage aus einem Faserverbundwerkstoff gebildet ist, der vorzugsweise nicht schmelzbar ist; und
(c) Verbinden der Stützstrukturlage und der Schaltungsträgerlage mit einem Fügeverfahren.

Unter einem nicht schmelzbaren Werkstoff ist vorliegend zu verstehen, dass der Werkstoff nicht ohne Zersetzung schmelzbar ist. Der Werkstoff kann also nicht ohne Veränderung seiner chemischen Zusammensetzung in einen flüssigen Zustand übergehen, wenn auch der Werkstoff eine Glasübergangstemperatur aufweisen kann, bei der der Werkstoff von einem spröden Glaszustand in einen weichen gummielastischen Zustand übergeht.

Indem ein Verbundwerkstoff für eine in das Wert- oder Sicherheitsdokument integrierbare Stützstrukturlage, die auf der sich keine elektronische Schaltung befindet, verwendet wird, ist gewährleistet, dass das Dokument auch bei lang andauernder Benutzung gegen Verwinden und Verbiegen geschützt ist. Insbesondere stellen sich keine Ermüdungserscheinungen des Materials ein, die zu einer Verformung unter Materialbelastung führen würden. Auch thermische Einflüsse vermögen dem Dokument, anders als herkömmlich aufgebauten Dokumenten, nicht die Dimensionsstabilität zu nehmen. Von daher kann das Dokument beispielsweise auf einer unebenen Unterlage bei intensiver Sonneneinstrahlung abgelegt und dort über längere Zeit belassen werden, ohne dass es Schaden nimmt. Die hohe Verwindungssteifheit und Robustheit des Dokuments wird durch dessen Monocoque-Aufbau erzielt, d.h. durch die Einbeziehung der Stützstrukturlage in den Aufbau. Dadurch wird ein Schutz der elektronischen Bauelemente gegen Beschädigung oder sogar Bruch erreicht. Das Dokument ist nicht delaminierbar und einfach herstellbar.

Der Faserverbundwerkstoff kann insbesondere mit einem nicht thermoplastischen, bevorzugter Weise mit einem duroplastischen, Matrix-Werkstoff, ganz besonders bevorzugt Polymerwerkstoff, gebildet sein. Der Polymerwerkstoff kann beispielsweise auf der Basis eines bi- oder höherfunktionellen Epoxidharzes, insbesondere auf Basis von Bisphenol A, oder eines Gemisches eines Epoxidharzes mit einem Bismaleimid/Triazin-Harz hergestellt sein. Letzteres ist beispielsweise in DE 25 12 085 B2 beschrieben. Alternativ kann auch ein Phenolharz, einschließlich Phenolharze vom Novolak-Typ, ferner in Form von Polyimid oder einemfluorierten Polymer, wie einem Polymer aus Tetrafluorethylen, das beispielsweise unter dem Namen Teflon^{®} (Marke von DuPont, USA) bekannt ist, bereitgestellt werden.

Das Fasermaterial des Faserverbundwerkstoffes ist vorzugsweise durch Glasfasern gebildet. Alternativ können auch Fasern aus anderen Materialien, wie Quarz, Aramid, Kohlenstoff (Carbonfasern, zum Beispiel mit Carbonfasern verstärkter Kunststoff (CFK)), gereckten Polymerfasern, beispielsweise Polyesterfasern, und dergleichen eingesetzt werden. Die Fasern können in ungeordneter Form in dem Verbundwerkstoff enthalten sein, indem beispielsweise ein Faserfilz zusammen mit dem Matrix-Werkstoff getränkt und letzterer ausgehärtet wird. Alternativ können die Fasern dem Matrix-Werkstoff auch in vereinzelter Form zugegeben werden, bevor dieser dann ausgehärtet wird. Vorteilhafter Weise liegen die Fasern in dem Matrix-Werkstoff in Form eines Gewebes vor, beispielsweise in Form von Gewebematten, insbesondere Glas-Gewebematten, die mit dem Matrix-Werkstoff getränkt sind, bevor dieser dann ausgehärtet wird.

In einer bevorzugten Weiterbildung der vorliegenden Erfindung ist der Faserverbundwerkstoff der Stützstrukturlage aus einem mit Glasfasergewebe verstärkten Duroplast, beispielsweise auf der Basis eines Epoxidharzes, gebildet. Derartige Materialien sind wegen ihrer Eigenschaften gegenüber chemischen, mechanischen und thermischen Beeinflussungen äußerst resistent. Insbesondere die mechanische Stabilität, beispielsweise Dimensionsstabilität gegen Biegebeanspruchung, ist bei derartigen Materialien aufgrund der Kombination eines nicht schmelzbaren Materials durch Auswahl eines Duroplasten und der Einbettung eines Glasfasergewebes in das Polymermaterial hervorragend.

Als besonders bevorzugte Materialien sind FR4-, FR5- und FR5/BT-Material verwendbar. FR4 wird aus mit bifunktionellem Epoxidharz getränkten Glasfasergewebematten hergestellt. FR5-Material unterscheidet sich davon durch die Verwendung von höherfunktionellen Epoxidharzen (tetra-, multifunktionelle Harze). FR5/BT-Material enthält zusätzlich Bimaleimid/Triazin-Harz. Die T_{g}-Punkte (Glasübergangstemperatur) dieser Materialien steigen in der Reihe T_{g}(FR4) <T_{g}(FR5) <T_{g}(FR5/BT) an. Durch Verwendung von FR5 oder sogar FR5/BT kann eine höhere thermische Belastbarkeit erreicht werden.

Gemäß einer bevorzugten Weiterbildung der vorliegenden Erfindung ist auch die Schaltungsträgerlage aus einem Faserverbundwerkstoff gebildet, der vorzugsweise mit einem besonders bevorzugt nicht schmelzbaren Polymer als Matrixwerkstoff gebildet ist. Hinsichtlich des Materials, aus dem die Schaltungsträgerlage gebildet ist, wird auf die vorstehenden Ausführungen zu dem Material für die Stützstrukturlage verwiesen, da das Material der Schaltungsträgerlage aus derselben Gruppe von Materialien ausgewählt sein kann, aus denen auch die Stützstrukturlage gebildet ist. Es ist besonders vorteilhaft, sowohl die Stützstrukturlage als auch die Schaltungsträgerplatte aus demselben Material herzustellen, da dadurch aufgrund gleicher thermischer Ausdehnungskoeffizienten eine gute Kompatibilität zwischen beiden Lagen erreicht wird. Dies führt zu überlegenen mechanischen Eigenschaften des Dokuments. Beispielsweise können sowohl die Stützstrukturlage als auch die Schaltungsträgerlage aus FR4-Material gebildet sein. Die Schaltungsträgerlage kann so dünn sein, dass sie biegbar ist (folienartig), und beispielsweise eine Dicke in einem Bereich von 50 µm bis 500 µm aufweisen (flexible Leiterplatte).

Die Schaltungsträgerlage trägt die elektronische Schaltung, indem diese auf der Schaltungsträgerlage hergestellt wird, beispielsweise mit üblichen Verfahren zum Herstellen von Leiterbahnen und Montieren von elektronischen Bauelementen auf einem Träger und elektrischen Verbinden der elektronischen Bauelemente mit den Leiterbahnen entsprechend dem gewünschten Schaltungslayout. Hierzu werden beispielsweise Kupferleiterbahnen mit chemischen Verfahren auf den Oberflächen der Schaltungsträgerlage chemisch abgeschieden oder Leiterbahnen aus einer Leiterpaste, beispielsweise mit darin enthaltenen Silberpartikeln, auf der Schaltungsträgerlage mit einem Druckverfahren erzeugt. Die elektronischen Bauelemente werden vorzugsweise mittels eines Klebemittels auf der Schaltungsträgerlage fixiert und dann elektrische Verbindungen der Kontaktflächen der Bauelemente mit den Leiterbahnen mittels eines üblichen Lötverfahrens hergestellt. Hierzu kann vor der Durchführung des Lötverfahrens eine Lötstoppmaske auf die mit den Bauelementen zu bestückende Oberfläche der Schaltungsträgerlage aufgetragen werden. Durch die Herstellung der elektronischen Schaltung auf der Schaltungsträgerlage wird eine Schaltungslage gebildet. Die Schaltungsträgerlagen werden typischerweise zunächst in einem Mehrfachnutzen mit den Leiterbahnen und gegebenenfalls der Lötstoppmaske versehen, woraufhin die Schaltungsträgerlagen in Einzelnutzen zerteilt und mit den elektronischen Bauelementen bestückt und hierzu einem Lötverfahren unterworfen werden. Beim Vereinzeln in die Einfachnutzen, beispielsweise mit einem Stanzverfahren, kann die zweidimensionale Gestalt der Schaltungsträgerlage erzeugt werden.

Gemäß einer weiteren bevorzugten Weiterbildung der vorliegenden Erfindung weist die Stützstrukturlage zumindest an einer Seite eine Ausnehmung zur passergenauen, d.h. spielfreien, Aufnahme der Schaltungsträgerlage mit der von dieser getragenen elektronischen Schaltung auf. Diese Ausnehmung nimmt hierzu vorzugsweise fast die gesamte Fläche der Stützstrukturlage an dieser Seite ein, vorzugsweise mindestens 80 %, weiter bevorzugt mindestens 85 %, noch weiter bevorzugt mindestens 90 % und am meisten bevorzugt mindestens 92,5 %. Die Ausnehmung nimmt vorzugsweise höchstens 99 %, weiter bevorzugt höchstens 98 % und am meisten bevorzugt höchstens 97,5 %, der Fläche der Stützstrukturlage ein. Die Ausnehmung wird vorzugsweise durch einen äußeren umlaufenden Steg der Stützstrukturlage an dieser Seite begrenzt/definiert. Abgesehen von gegebenenfalls vorhandenen Durchbrechungen in der Stützstrukturlage ist die Ausnehmung vorzugsweise über deren gesamte Fläche gleichbleibend tief.

Die durch die Ausnehmung gebildete Gestalt der Stützstrukturlage kann in dieser Ausführungsform auch durch den am äußeren Lagenrand umlaufenden Steg, vorzugsweise mit rechteckigem Querschnitt, entsprechend einer stufigen Erhöhung der Dicke der Lage im Bereich des Steges, beschrieben werden, indem dieser Steg die Ausnehmung umlaufend begrenzt.

Die Ausnehmung hat vorzugsweise eine im Wesentlichen rechteckige Gestalt, gegebenenfalls mit abgerundeten Ecken, und hat in einer besonders bevorzugten Ausführungsform eine der Gestalt der Stützstrukturlage ähnliche Gestalt, indem beispielsweise der die Ausnehmung begrenzende umlaufende Steg über alle Ränder oder zumindest über drei Ränder der Lage gleichbleibend breit ist.

Die Tiefe der Ausnehmung in der Stützstrukturlage ist vorzugsweise genauso groß wie die Dicke der Schaltungsträgerlage, sodass diese beim Zusammentragen dieser beiden Lagen in die Ausnehmung so einpassbar ist, dass sie mit der Oberseite des die Ausnehmung definierenden Steges bündig abschließt.

Die äußere Gestalt und die Abmessungen der Schaltungsträgerlage sind zudem vorzugsweise an die Gestalt und die Abmessungen der Ausnehmung genau angepasst, sodass die Schaltungs(träger)lage beim Einsetzen in die Ausnehmung spielfrei in diese einpassbar ist.

Die Stützstrukturlage kann in einer weiteren bevorzugten Weiterbildung der vorliegenden Erfindung ferner zusätzlich zu dieser (ersten) Ausnehmung an einer ersten Seite der Lage eine zweite Ausnehmung an einer zweiten Seite der Lage aufweisen. Für die zweite Ausnehmung gilt das für die erste Ausnehmung vorstehend Beschriebene entsprechend. Die zweite Ausnehmung kann dieselbe Gestalt und dieselben Abmessungen haben wie die erste Ausnehmung. Die Tiefe der zweiten Ausnehmung kann sich an einer weiteren Dokumentenlage orientieren, dergestalt dass diese weitere Dokumentenlage nach dem Einsetzen in die zweite Ausnehmung mit der Oberseite des Steges an der zweiten Seite wiederum bündig abschließt. Die Gestalt und die Abmessungen der weiteren Dokumentenlage können wie im Falle der Schaltungsträgerlage an die Gestalt und die Abmessungen der zweiten Ausnehmung angepasst sein, sodass diese weitere Dokumentenlage in die zweite Ausnehmung passergenau, d.h. spielfrei, einsetzbar ist.

Gemäß der Erfindung ist zumindest an einer Seite der Schaltungsträgerlage mindestens ein elektronisches Halbleiterbauelement angeordnet. Zusätzlich können auch mindestens eine Anzeigevorrichtung und/oder mindestens ein biometrischer Sensor angeordnet an der einem Seite der der Schaltungsträgerlage angeordnet sein. Die Stützstrukturlage weist in diesem Falle vorzugsweise mindestens eine Durchbrechung auf, wobei das mindestens eine elektronische Halbleiterbauelement, die mindestens eine Anzeigevorrichtung und/oder der mindestens eine biometrische Sensor und/oder noch ein anderes elektronisches Bauelement in einem assemblierten Zustand von jeweils einer Durchbrechung in der Stützstrukturlage aufgenommen wird. Diese mindestens eine Durchbrechung ist innerhalb der ersten Ausnehmung angeordnet. Dadurch wird erreicht, dass diese elektronischen Bauelemente gegen Brechen oder An- oder Abrisse von deren elektrischen Kontakten bei einer mechanischen Beanspruchung des Dokuments geschützt sind. In diesem Falle wird ausgenutzt, dass die Durchbrechungen größer sind als die elektronischen Bauelemente, sodass die Bauelemente im assemblierten Zustand der Stützstrukturlage mit der Schaltungslage von den Durchbrechungswänden beabstandet sind und sich zwischen den Bauelementen und den Durchbrechungswänden Hohlräume ergeben. Zu dem vorgenannten Zweck ist die Dicke der Stützstrukturlage im Bereich der Durchbrechungen vorzugsweise mindestens so groß wie die Höhe der sich über die Schaltungsträgerlage erhebenden Bauelemente, sodass die Bauelemente mit der Außenfläche der Stützstrukturlage an der der Schaltungslage gegenüber liegenden Seite allenfalls bündig abschließen, keinesfalls aber über diese vorstehen. Dadurch wird ein effektiver Schutz der Bauelemente gegen mechanische Beeinträchtigung geschaffen. Die Stützstrukturlage wirkt in diesem Falle wie eine Ausgleichslage, die Unebenheiten, die ansonsten durch die elektronischen Bauelemente gebildet würden, ausgleicht, d.h. zum Höhenausgleich.

Erfindungsgemäß ist dieser mindestens eine Hohlraum, der durch die mindestens eine Durchbrechung und das mindestens eine von der Durchbrechung aufgenommene elektronische Bauelement gebildet ist, nach dem Zusammentragen der Schaltungsträgerlage mit der Stützstrukturlage mit einem Polymermaterial gefüllt. Dieses Polymermaterial vernetzt beim Montageprozess und bildet eine Umhüllung um die elektronischen Bauelemente innerhalb des Dokuments. Vorzugsweise ist dieses Polymermaterial nach der Vernetzung elastisch, sodass es Scher- und Druckkräfte aufnehmen und ableiten kann. Alternativ kann auch eine weitere Dokumentenlage als Fließlage auf der der elektronischen Schaltungsträgerlage abgewandten Seite der Stützstrukturlage angeordnet sein, deren thermische Eigenschaften dazu ausgebildet sind, dass diese Lage bei der Montage des Dokuments, insbesondere bei einem thermischen Behandlungsschritt, beispielsweise zum Aushärten eines Reaktiv-Klebstoffes, erweicht, in die Hohlräume hineinfließt und diese dabei ausfüllt. Hierzu ist die Erweichungstemperatur des Polymermaterials dieser Fließlage so gering zu wählen, dass das Material bei der angewendeten Fügetemperatur erweicht und in die Hohlräume fließt. Das die Hohlräume ausfüllende Polymermaterial oder das Material der Fließlage ist vorzugsweise transparent, um zu gewährleisten, dass eine von dem Material umhüllte Anzeigevorrichtung von außen sichtbar bleibt.

In einer weiteren bevorzugten Weiterbildung der vorliegenden Erfindung ist das erfindungsgemäße Wert- oder Sicherheitsdokument zusätzlich durch mindestens eine weitere Dokumentenlage gebildet. Diese mindestens eine weitere Dokumentenlage kann aus einem Polymer gebildet sein, das ausgewählt ist aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, oder Papier oder Pappe oder Glas oder Metall oder Keramik. Es können auch weitere Dokumentenlagen aus mehreren dieser Materialien verwendet werden. Bevorzugt bestehen die weiteren Dokumentenlagen aus PC oder PC/TPU/PC. Die Polymere können entweder gefüllt oder ungefüllt vorliegen. Im letzteren Falle sind sie vorzugsweise transparent oder transluzent. Falls die Polymere gefüllt sind, sind sie opak. Diese weiteren Dokumentenlagen können ferner Druckschichten, beispielsweise einen Sicherheitsdruck, tragen. Grundsätzlich ist es ferner möglich, dass auch die Stützstrukturlage und die Schaltungsträgerlage aus einem der vorgenannten Materialien gebildet sind, wobei das Material der Stützstrukturlage allerdings erfindungsgemäß in Form eines Verbundwerkstoffes ausgebildet ist und das Material beider Lagen dennoch vorzugsweise nicht schmelzbar ist.

In einer weiteren bevorzugten Weiterbildung der vorliegenden Erfindung weist die Stützstrukturlage zumindest an der zweiten Seite die zweite Ausnehmung zur passergenauen, d.h. spielfreien, Aufnahme einer weiteren Dokumentenlage in Form einer Decklage auf. Somit weist das Wert- oder Sicherheitsdokument in dieser Weiterbildung an der der Schaltungslage gegenüberliegenden Seite der Stützstrukturlage die Decklage auf. Die Decklage dient bevorzugt dazu, die elektronischen Bauelemente gegen äußere Einflüsse zu schützen. Ferner kann die Decklage die Stützstrukturlage auch visuell abschirmen. Hierzu ist die Decklage bevorzugt opak und/oder weist weiter bevorzugt einen Sicherheitsdruck auf. Die Decklage kann durch eine Polymerfolie gebildet sein, die mit Pigment opak eingefärbt ist. Die Decklage kann durch ein Laminat aus mehreren Einzellagen von Polymerfolien aus denselben oder unterschiedlichen Polymeren gebildet sein.

Die Decklage kann eine oder mehrere Durchbrechungen aufweisen, etwa um eine Berührung eines biometrischen Sensors, beispielsweise einer Fingerabdruckscan-Vorrichtung, von der Vorderseite des Dokuments zu ermöglichen. Ferner kann der Sicherheitsdruck der Decklage und/oder eine opake Innenlage bereichsweise unterbrochen sein, sodass ein Durchsichtsfenster gebildet wird, damit beispielsweise eine dahinter angeordnete Anzeigevorrichtung von außen sichtbar ist. Dies setzt natürlich voraus, dass das Material der Decklage an sich transparent oder zumindest transluzent ist und die Decklage nur durch den Sicherheitsdruck opak wird.

In noch einer weiteren bevorzugten Weiterbildung der vorliegenden Erfindung weist das Wert- oder Sicherheitsdokument an der der Stützstrukturlage gegenüberliegenden Seite der Schaltungslage noch eine weitere Dokumentenlage in Form einer Abschlusslage auf. Die Abschlusslage befindet sich demnach auf der Seite des Dokuments, die der Seite gegenüberliegt, an der sich die Decklage befindet. Die Abschlusslage ist wie die Decklage vorzugsweise opak eingefärbt, beispielsweise mit Pigmenten gefüllt, und schirmt auf diese Weise die Rückseite der Schaltungslage visuell ab. Alternativ dazu oder zusätzlich kann die Abschlusslage eine Druckschicht aufweisen. Das Material der Abschlusslage kann in diesem Falle transparent oder transluzent sein. Die Abschlusslage dient wie die Decklage primär dazu, die elektronischen Bauelemente im Inneren des Dokuments gegen äußere Einflüsse zu schützen. Auch die Abschlusslage kann entweder durch eine Polymerfolie oder ein Laminat aus mehreren Polymerfolien gebildet sein, wobei die Polymerfolien im letzteren Falle aus demselben Polymer oder aus unterschiedlichen Polymeren hergestellt sein können.

Die Gestalt und die Abmessungen sowohl der Decklage als auch der Abschlusslage können für den Fall, dass die Stützstrukturlage eine oder zwei der beschriebenen Ausnehmungen aufweist, dazu ausgebildet sein, dass diese Lagen in die jeweilige Ausnehmung einpassbar sind, vorzugsweise spielfrei. Dies setzt im Falle der Abschlusslage natürlich voraus, dass die Schaltungslage nicht mit der Außenseite des Steges bündig abschließt sondern gegenüber dieser zurücksteht und die Abschlusslage noch in die Ausnehmung einsetzbar ist.

Die Bedruckung auf der Decklage und/oder der Abschlusslage befindet sich vorzugsweise an der nach innen weisenden Seite der Lage, sodass sie gegen mechanische Beeinträchtigungen, wie Abrieb, geschützt ist. Die Bedruckung der Decklage und/oder der Abschlusslage kann zur farbigen Personalisierung des Wert- oder Sicherheitsdokuments dienen. Beispielsweise kann eine Lage oder können beide Lagen mit personalisierenden Informationen des Dokumenteninhabers bedruckt sein, beispielsweise mit dem Gesichtsbild des Dokumenteninhabers, mit Daten des Inhabers in alphanumerischer Form, wie dem Namen, Geburtsdatum und -ort, der Adresse und dergleichen, und/oder der Unterschrift des Inhabers. Anstelle des Personalisierungsdruckes oder zusätzlich dazu kann auch ein nicht individualisierender Druck auf die Lage(n) aufgedruckt werden. Diese Sicherheitsdrucke werden vorzugsweise auf die nach innen weisenden Flächen aufgebracht.

Zusätzlich zu der Decklage und der Abschlusslage können noch weitere außen liegende Lagen vorhanden sein, die sich dann vorzugsweise auch über die Stege der Stützstrukturlage erstrecken und diese nach außen abdecken. In diesem Falle weisen diese weiteren außen liegenden Dokumentenlagen anstelle der durch sie verdeckten Deck- und/oder Abschlusslagen gegebenenfalls eine Bedruckung auf. Diese weiteren Dokumentenlagen können aber auch lediglich als transparente oder transluzente Lagen ausgebildet sein, durch die die Bedruckung der Deck- und/oder Abschlusslagen von außen erkennbar bleibt.

In einer weiteren bevorzugten Weiterbildung der vorliegenden Erfindung umfasst die elektronische Schaltung eine RFID-Schaltung mit einem RFID-IC (integrated circuit), der ein elektronisches Halbleiterbauelement ist, und einer RFID-Antenne, eine Fingerabdruckscan-Vorrichtung, die ebenfalls ein elektronisches Halbleiterbauelement enthält, und eine Anzeigevorrichtung, die ebenfalls mindestens ein elektronisches Halbleiterbauelement enthalten kann. Darüber hinaus kann die elektronische Schaltung weitere elektronische Bauelemente enthalten, beispielsweise einen zentralen Prozessor. Alternativ zu der RFID-Schaltung oder zusätzlich zu dieser kann die Schaltungslage auch ein mit an einer Außenseite des Dokuments freiliegenden Kontaktflächen versehenes IC-Modul tragen. Die Schaltungsträgerlage kann mit einer oder mehreren Leiterbahnebenen als gedruckte Schaltung ausgebildet sein. Durch die Integration der RFID-Schaltung ist eine kontaktlose Kommunikation des Wert- oder Sicherheitsdokuments mit einem externen Schreib-/Lesegerät möglich.

Das Wert- oder Sicherheitsdokument weist bevorzugt keine Energiequelle, beispielsweise Batterie, auf. Damit wird gewährleistet, dass das Dokument über einen sehr langen Zeitraum funktionsbereit gehalten werden kann. Denn die Verwendung einer Batterie limitiert die Verwendbarkeitsdauer des Dokuments auf ein oder zwei Jahre. Die für den Betrieb der elektronischen Bauelemente, insbesondere der Anzeigevorrichtung, erforderliche elektrische Energie kann von einem Schreib-/Lesegerät über die RFID-Antenne des Dokuments eingespeist werden.

Die RFID-Antenne kann durch mehrere spulenartige Windungen gebildet sein, die beispielsweise in einer einzigen Schaltungsebene angeordnet sind. Beispielsweise sind die Windungen der Antenne auf die Schaltungsträgerlage aufgedruckt. Der RFID-IC ist mit den Windungen der Antenne verbunden. Die Windungen der Antenne können beispielsweise auf die Schaltungsträgerlage aufgedruckt werden. Dieser Druckvorgang kann mit einer einschlägig bekannten Drucktechnik des Durch-, Tief-, Hoch- und Flachdrucks oder Digitaldrucks vorgenommen werden. Nach einer Ausführungsform der Erfindung ist die Antenne spulenförmig ausgebildet und in einem Randbereich des Dokuments angeordnet. Die Windungen der Antenne sind dabei umlaufend entlang des Randes des Dokuments angeordnet, d.h. die einzelnen Windungen sind nebeneinander angeordnet. Beispielsweise wird die Antenne mit einer aufgedruckten Paste, die leitfähige Partikel beinhaltet, insbesondere mit einer Silberleitpaste, oder einem anderen leitfähigen Material, wie zum Beispiel einem leitfähigen Polymer, gebildet.

Der RFID-IC kann als ungehäuster oder gehäuster Chip in einer der oben genannten Bauformen vorliegen. Falls der RFID-IC als ungehäuster Chip vorliegt, kann er durch Flip-Chip-Klebetechnik auf der Schaltungsträgerlage montiert und mit der Antenne verbunden werden. Beispielsweise kann er in bekannter Weise über einen anisotrop leitfähigen Klebstoff und mittels eines kollabierten Lots mit der Antenne elektrisch und mechanisch verbunden werden. Der RFID-IC weist einen Speicher auf, in den vorzugsweise individualisierende, besonders bevorzugt personalisierende Information eingeschrieben werden können. Beispielsweise können biometrische Informationen des Dokumenteninhabers, wie Gesichtsbild, Fingerabdrücke, Unterschriftsprobe, ferner der Name, das Geburtsdatum, die Adresse und dergleichen, eingeschrieben werden.

Die Anzeigevorrichtung weist ein Anzeigeelement auf, das zur visuellen Darstellung insbesondere der personenbezogenen Daten dient. Die Anzeigevorrichtung kann vorzugsweise bistabil ausgeführt sein, sodass sie im stromlosen Zustand ihre Information behält. Derartige Anzeigen sind vorzugsweise als elektrophoretische, ferroelektrische oder cholesterische Flüssigkristall-Anzeigen ausgebildet. Das Anzeigeelementkann auch durch ein passives oder aktives, selbstleuchtendes Anzeigesystem auf der Basis von OLED-Elementen gebildet werden. Im Falle von aktiven OLED-Elementen wird die Anzeige unter Zuhilfenahme eines Lesegeräts oder über eine eingebaute Energiequelle aktiviert, wodurch die Darstellung dann visuell erkennbar wird. Das Anzeigeelement wird vorzugsweise über einen Anzeigentreiber-IC betrieben. Die Anzeigevorrichtung kann auf einem separaten Anzeigeträger montiert sein, der seinerseits auf der Schaltungsträgerlage montiert ist. Die Anzeigevorrichtung weist vorzugsweise randseitig Kontaktstellen auf, über die die Anzeigevorrichtung mit den Leiterbahnen auf der Schaltungsträgerlage elektrisch verbunden ist.

Die Fingerabdruckscan-Vorrichtung kann ferner elektrisch mit einem zentralen Verarbeitungsprozessor-IC verbunden sein, der diesen steuert und auf dem Verschlüsselungsalgorithmen gespeichert sein können. Der zentrale Prozessor-IC- ist vorzugsweise elektrisch mit der Anzeigevorrichtung verbunden.

In einer weiteren bevorzugten Weiterbildung der vorliegenden Erfindung ist das Fügeverfahren zum Verbinden zumindest der Stützstrukturlage mit der Schaltungs(träger)lage ein Klebeverfahren. Die Stützstrukturlage und die Schaltungslage werden hierzu vorzugsweise mittels eines latent-reaktiven Klebstoffes miteinander verbunden, beispielsweise mit einem thermischen Behandlungsverfahren. Latent-reaktive Klebstoffe sind an sich in vielfältiger Weise bekannt. Hierzu wird beispielsweise auf EP 0 922 720 A1 verwiesen. Es handelt sich typischerweise um Polyisocyanat-Partikel, beispielsweise in einer Dispersion, welche oberflächendesaktiviert sind. Eine solche Dispersion kann mit dem Polyisocyanat reaktive Substanzen, wie niedermolekulare Di-, Tri-, oder Polyole, oder polymere Di-, Tri-, oder Polyole enthalten. Eine Schicht aus einem solchen Klebstoff kann ohne weitere Behandlung bereits über adhäsive Eigenschaften verfügen. Wesentlich ist aber, dass das Isocyanat bei Erwärmung der Schicht über eine Reaktionstemperatur wieder aktiviert wird und mit anderen funktionellen Gruppen im Klebstoff, aber insbesondere auch in Polymeren, mit welchen der Klebstoff in Kontakt ist, reagiert und so eine stoffschlüssige und nicht ohne weiteres lösbare Verbindung bildet. Alternativ kann die Schaltungs(träger)lage mit der Stützstrukturlage mittels Isocyanatkleber verbunden werden.

Sofern das Wert- oder Sicherheitsdokument ferner durch weitere Lagen, wie die Decklage und die Abschlusslage, gebildet wird, können diese mit der Stützstrukturlage und der Schaltungslage assembliert und ebenfalls mittels eines Klebeverfahrens zu dem Dokument zusammengefügt werden. Für die Durchführung des Klebeverfahrens wird vorzugsweise ein derartiger thermisch aktivierbarer latent-reaktiver Klebstoff eingesetzt. Das Fügeverfahren kann bevorzugt in einer Laminiervorrichtung ausgeführt werden, nachdem die einzelnen Lagen in einem Stapel zusammengetragen worden sind. Die Laminiervorrichtung kann eine herkömmliche Heiß/Kalt-Laminierpresse sein, die entweder einen Betrieb im Batch- oder Durchlaufverfahren ermöglicht.

In einer weiteren bevorzugten Weiterbildung der vorliegenden Erfindung weist die Schaltungsträgerlage Durchbrechungen auf, die einen Durchtritt von Klebemittel erlauben. Dadurch kann der latent-reaktive Klebstoff in den Durchbrechungen weitere Lagen, wie die Decklage oder die Abschlusslage, zusätzlich direkt mit der Stützstrukturlage verbinden. Dies gewährleistet eine weiter verbesserte Haftfestigkeit des Gesamtaufbaus.

Das montierte und gefügte Wert- oder Sicherheitsdokument enthält die vorstehend beschriebenen Dokumentenlagen in dem gefügten Zustand, wobei aneinander angrenzende Lagen dann, wenn sie ohne ein Klebemittel miteinander verbunden sind und aus demselben Material bestehen, möglicherweise nicht mehr als solche erkennbar sind sondern als monolithischer Lagenblock. Dies trifft jedoch nur auf solche Lagen zu, die aus einem thermoplastischen Material gebildet sind und die bei einem Laminierschritt miteinander verschmelzen. Ansonsten können die Lagen, zumindest bei einem Schnitt durch das Dokument separat, d.h. voneinander getrennt, erkennbar sein. Zwischen den Lagen und in der Umgebung der elektronischen Bauelemente sind vorzugsweise keine Hohlräume vorhanden. Ursprünglich vorhandene Hohlräume werden beim Fügeprozess vorzugsweise durch die miteinander gefügten Materialien gefüllt. In der Umgebung der elektronischen Bauelemente ursprünglich vorhandene Hohlräume können mit einem zusätzlich zu den Dokumentenlagen verwendeten Polymermaterial ausgefüllt sein, das bei einem Schnitt durch das Dokument ebenfalls separat erkennbar ist. Sofern die Stützstrukturlage eine oder zwei Ausnehmungen zur Aufnahme der Schaltungslage und gegebenenfalls einer Decklage aufweist, können die die Ausnehmungen begrenzenden Stege als separate Randbereiche von außen erkennbar sein. Dies setzt aber voraus, dass diese nicht von noch weiteren Dokumentenlagen verdeckt sind.

In einer weiteren Weiterbildung der vorliegenden Erfindung wird Spritzgießen als Fügeprozess verwendet (Niederdruck-Spritzgießen oder Hochdruck-Spritzgießen). Dazu werden die Schaltungslage und die Stützstrukturlage in eine Werkzeugform gelegt. Die beiden Lagen können zuvor miteinander verklebt sein, um sie besser miteinander zu verbinden. Anschließend werden die Stützstrukturlage und die Schaltungs(träger)lage vollständig von Polymermaterial umflossen. Dadurch werden beispielsweise eine schützende Decklage und eine Abschlusslage gebildet. Beim klassischen Spritzguss werden üblicherweise hohe Drücke von 100 bis 1000 bar verwendet.

Übliche Materialien für Spritzguss sind Polyamid (PA), Polyetheretherketon (PEEK), Polyethylen (PE), Polyamidimid (PAI), Acrylnitril-Butadien-Styrol-Copolymer (ABS), Polycarbonat (PC), Polyoxymethylen (POM), Polybutylenterephthalat (PBT), Polypropylen (PP), thermoplastisches Polyurethan (TPU), Polyacrylsäure (PAA), Polyphthalamid (PPA), Polystyrol (PS), thermoplastische Elastomere (TPE), Polyetherimid (PEI), Polyethersulfon (PES), Polysulfon (PSU), Styrol-Acrylnitril-Copolymer (SAN), Polymethylmethacrylat (PMMA), Polyphenylenoxid (PPO), Polyphenylensulfid (PPS), Polyphenylensulfon (PPSU), Polyethylenterephthalat (PET).

Beim Niederdruck-Spritzguss verwendet man geringere Drücke von 5 bis 40 bar. Bei diesem Hotmelt-Molding-Verfahren werden Schmelzkleber eingesetzt. Der Vorteil hier liegt darin, dass der niedrigere Druck weniger Schädigungen an elektronischen Bauelementen verursacht. Alternativ kann auch ein Vergussverfahren mit zweikomponentigen Vergussmassen eingesetzt werden. Diese haben den Vorteil, dass ein erneutes Erwärmen den Kunststoff nicht wieder erweichen kann. Eine Manipulation des ID-Dokumentes ist somit erschwert.

Eine grafische Gestaltung und Personalisierung des Dokuments kann sowohl dann, wenn es, wie weiter oben beschrieben, aus einzelnen Folien mit einem Laminierverfahren hergestellt wird, als auch dann, wenn es mit dem vorstehend beschriebenen Hochdruck- oder Niederdruck-Spritzgussverfahren hergestellt wird, durch gegebenenfalls finales Bedrucken erfolgen, zum Beispiel mittels Inkjet-Digitaldruck oder im Retransfer- oder Thermotransferdruckverfahren. In diesem Falle kann eine äußere Bedruckung durch einen abschließend aufgebrachten Schutzlack oder eine Schutzfolie geschützt werden. Ansonsten kommt für eine grafische Gestaltung der Außenseiten des Dokuments die Einlage der grafisch gestalteten Deck- und Abschlusslagen in Betracht, die, wie weiter oben beschrieben, oberhalb bzw. unterhalb des Stapels aus Stützstrukturlage und Schaltungslage in dem zu laminierenden Lagenstapel angeordnet sind.

Das erfindungsgemäße Wert- oder Sicherheitsdokument kann zusätzlich zu den beschriebenen Sicherheitselementen und -merkmalen weitere Sicherheitsmerkmale aufweisen, die entweder individualisierend oder nicht individualisierend sind. Als weitere Sicherheitsmerkmale kommen Melierfasern, Guillochen, Wasserzeichen, Prägedrucke, Sicherheitsfäden, Mikroschrift, Kippbilder, Hologramme, optisch variable Pigmente, lumineszierende Farben, Durchlichtpasser und dergleichen in Betracht.

Zur näheren Veranschaulichung der vorliegenden Erfindung dienen die nachfolgend beschriebenen Figuren, anhand derer die Erfindung lediglich exemplarisch mit Ausführungsbeispielen erläutert wird.
- Fig. 1: zeigt isometrische Darstellungen eines erfindungsgemäßen Wert- oder Sicherheitsdokuments; (A) in einer ersten Ausführungsform; (B) in einer zweiten Ausführungsform;
- Fig. 2: zeigt isometrische Darstellungen (A) der Stützstrukturlage und (B) der Schaltungslage gemäß der zweiten Ausführungsform;
- Fig. 3: zeigt Ansichten von Dokumentenlagen des erfindungsgemäßen Wert- oder Sicherheitsdokuments in der zweiten Ausführungsform; (A) Decklage; (B) Schaltungslage; (C) Stützstrukturlage; (D) Abschlusslage;
- Fig. 4: zeigt Schnittansichten A-A (siehe Fig. 1A) eines erfindungsgemäßen Wert- oder Sicherheitsdokuments in der ersten Ausführungsform, hergestellt in einer ersten Verfahrensvariante; (A) vor dem Assemblieren und Fügen; (B) nach dem Assemblieren und Fügen;
- Fig. 5: zeigt Schnittansichten A-A (siehe Fig. 1A) eines erfindungsgemäßen Wert- oder Sicherheitsdokuments in der ersten Ausführungsform, hergestellt in einer zweiten Verfahrensvariante; (A) vor dem Assemblieren in einem Spritzgussverfahren; (B) beim Umspritzen mit dem Spritzgussverfahren; (C) nach dem Assemblieren und Umspritzen;
- Fig. 6: zeigt Schnittansichten B-B (siehe Fig. 1B) eines erfindungsgemäßen Wert- oder Sicherheitsdokuments in der zweiten Ausführungsform, hergestellt in der ersten Verfahrensvariante; (A) vor dem Assemblieren und Fügen; (B) nach dem Assemblieren und Fügen;
- Fig. 7: zeigt Schnittansichten B-B (siehe Fig. 1B) eines erfindungsgemäßen Wert- oder Sicherheitsdokuments in der zweiten Ausführungsform, hergestellt in der zweiten Verfahrensvariante; (A) vor dem Assemblieren in einem Spritzgussverfahren; (B) beim Umspritzen mit dem Spritzgussverfahren, (C) nach dem Assemblieren und Umspritzen;
- Fig. 8: zeigt Schnittansichten entsprechend einem Schnitt A-A (siehe Fig. 1A) eines erfindungsgemäßen Wert- oder Sicherheitsdokuments in einer dritten Ausführungsform; (A) vor dem Assemblieren und Fügen; (B) nach dem Assemblieren und Fügen.

In den Figuren bezeichnen gleiche Bezugszeichen gleiche Elemente oder Elemente mit derselben Funktion. Die Figuren zeigen die Gegenstände nicht in jedem Falle maßstäblich zueinander. Ferner sind auch die Größenverhältnisse einzelner Elemente zu denen anderer in einer Figur oder zwischen den Figuren nicht in jedem Falle maßstäblich zueinander dargestellt.

Soweit nachfolgend eine ID-Karte 1000 beschrieben wird, bezieht sich diese Beschreibung auf jegliches Wert- oder Sicherheitsdokument in entsprechender Weise.

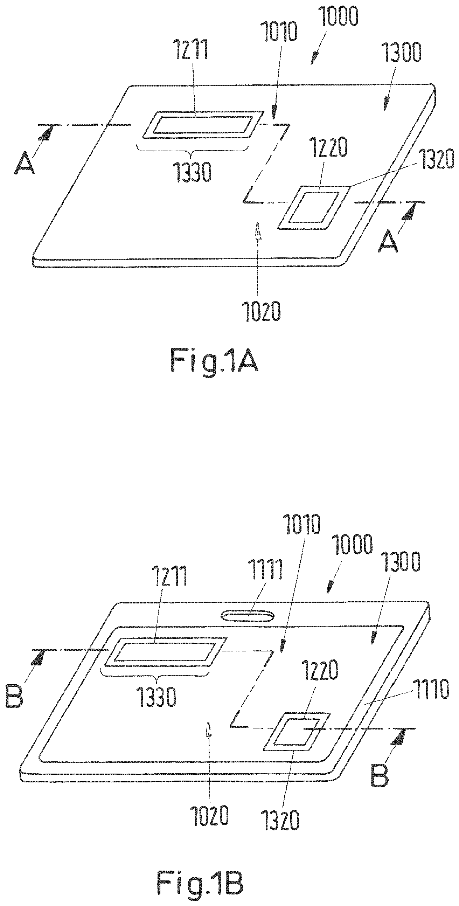

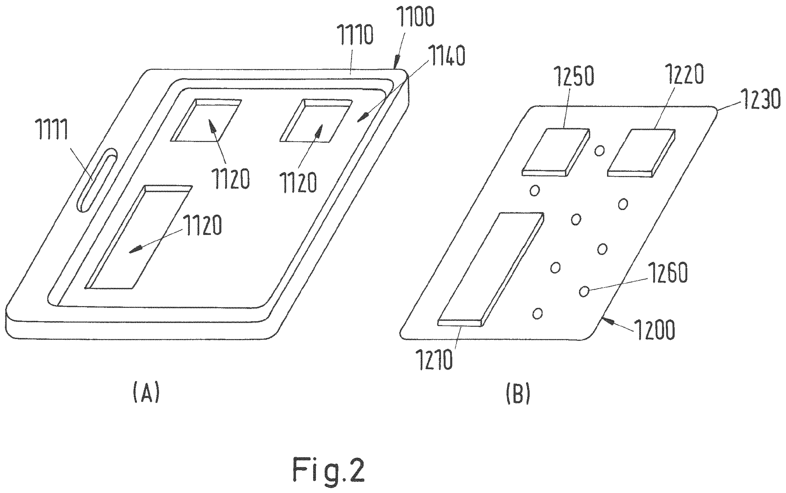

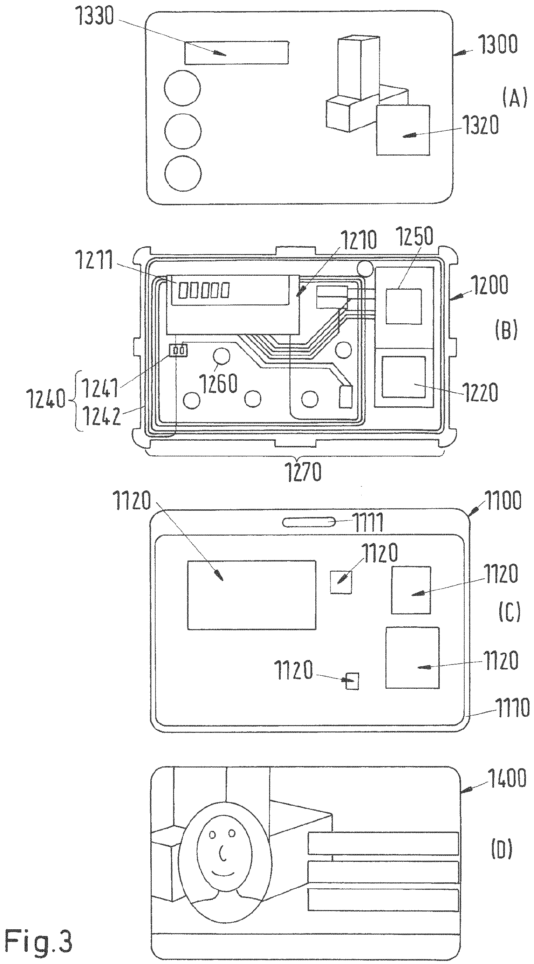

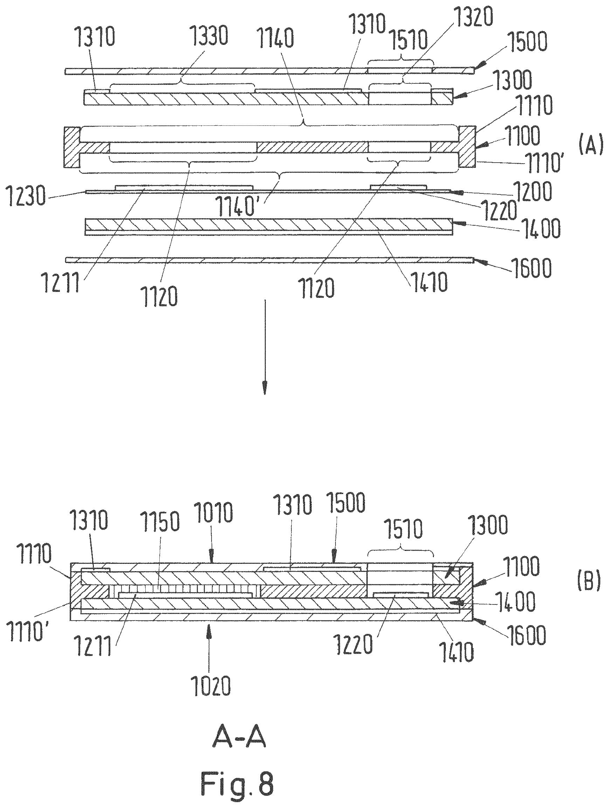

Die in Fig. 1A, 1B dargestellten ID-Karten 1000 weisen zumindest ein Anzeigeelement 1211 einer Anzeigevorrichtung 1210 (Fig. 3B) und einen biometrischen Sensor 1220, beispielsweise in Form einer Fingerabdruckscan-Vorrichtung, auf. Von außen nicht sichtbar ist eine RFID-Schaltung 1240 (Fig. 3B), bestehend aus einem RFID-IC 1241 und einer RFID-Antenne 1242. Außerdem sind unter der obersten Decklage 1300 weitere Schaltungsbestandteile und Bauelemente angeordnet, beispielsweise ein zentraler Prozessor 1250, die von außen nicht erkennbar sind. Alle elektronischen Bauelemente und Leiterbahnen bilden zusammen eine elektronische Schaltung 1270 (Fig. 3B). Auch wenn Fig. 2, 3 die einzelnen Dokumentenlagen für die Herstellung der ID-Karte in der zweiten Ausführungsform (Fig. 1B) zeigen, gilt die in diesen Figuren gezeigte Ausbildung der Schaltungslage 1200 auch für die erste und die in Fig. 8 gezeigte dritte Ausführungsform.

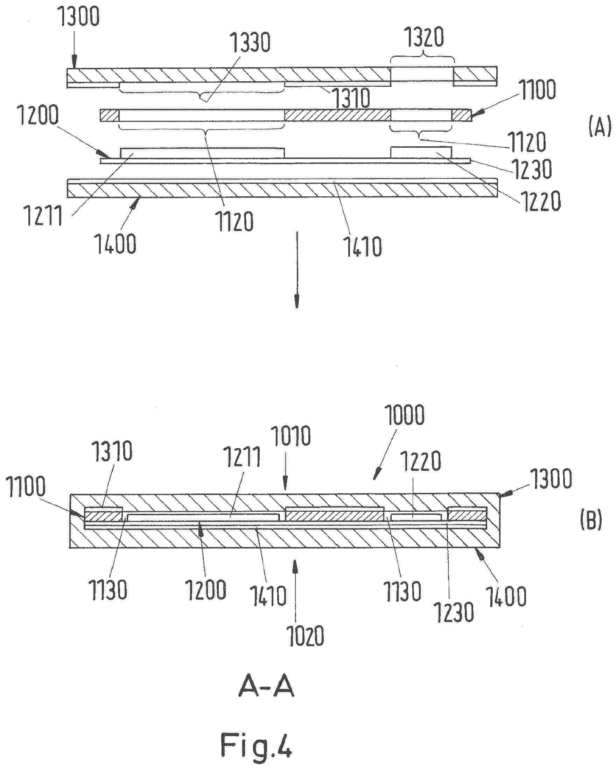

In Fig. 1A, 4B ist eine erste Ausführungsform der erfindungsgemäßen ID-Karte 1000 in assembliertem und gefügtem Zustand dargestellt, wobei die beiden Verfahrensschritte gemäß Fig. 4A, 4B die Herstellung in einer ersten Verfahrensvariante wiedergeben. In Fig. 4A sind die Dokumentenlagen 1100, 1200, 1300, 1400 in noch nicht assembliertem Zustand gezeigt. Die Dokumentenlagen sind in dieser ersten Verfahrensvariante durch Lagenmaterial gebildet. In dieser Ausführungsform ist von der in Fig. 1A gezeigten Oberseite der Karte lediglich die oben liegende Decklage 1300 sichtbar (Fig. 4), die alle anderen Dokumentenlagen darunter verbirgt. Denn die Decklage weist eine an der nach innen weisenden Oberfläche liegende Bedruckung 1310, beispielsweise in Form eines Sicherheitsdruckes, auf, die die darunter liegenden Strukturen der Karte nach außen visuell abschirmt. Alternativ kann die Decklage auch beispielsweise mit Pigmenten durchgefärbt und daher opak sein. Der Sicherheitsdruck kann beispielsweise individualisierende Kennzeichen, insbesondere personalisierende Kennzeichen, enthalten, beispielsweise ein Gesichtsbild in Form eines Fotos des Karteninhabers, und/oder in alphanumerischem Format ausgebildete Informationen, beispielsweise den Namen, den Geburtstag, -ort und/oder die Adresse des Karteninhabers und/oder eine Karten-Seriennummer, und/oder gegebenenfalls nichtindividualisierende Kennzeichen, wie einen Guillochendruck, Logos, Embleme, Siegel, Wappen, Motive und dergleichen. In die Decklage ist eine Durchbrechung 1320 eingebracht, durch die der biometrische Sensor 1220 nach außen hin freiliegt und daher zum Gebrauch der Karte berührt werden kann. Ferner ist die Bedruckung im Bereich 1330 unterbrochen. Damit das Anzeigeelement 1211 durch dieses Durchsichtsfenster von außen sichtbar ist, ist die Decklage aus einem transparenten Material, beispielsweise aus transparentem Polycarbonat, ausgebildet. Falls die Decklage durchgefärbt und daher auch schon ohne Bedruckung opak ist, muss sie im Bereich des Anzeigeelements eine Durchbrechung aufweisen, damit dieses von außen sichtbar ist.

Die sich von einer oberen Sichtseite 1010 der ID-Karte 1000 aus unterhalb der Decklage 1300 befindende Stützstrukturlage 1100 ist vorzugsweise aus FR4-Material hergestellt. Es kann aber auch ein anderer Verbundwerkstoff verwendet werden. Die Stützstrukturlage weist im Bereich der elektronischen Bauelemente 1210, 1220, 1250 Durchbrechungen 1120 auf (Fig. 2A), die beispielsweise mit einem Stanzverfahren in die Lage eingebracht sind. Die Bauelemente ragen nach dem Assemblieren der Schaltungslage 1200 mit der Stützstrukturlage in die Durchbrechungen hinein. Vorzugsweise entspricht die Dicke der Stützstrukturlage ungefähr der Höhe der Bauelemente über der Schaltungsträgerlage 1230, sodass die Bauelemente ungefähr mit der Oberfläche der Stützstrukturlage bündig abschließen, die der Schaltungslage gegenüber liegt. Jedenfalls sollen die Bauelemente nicht über diese Oberfläche hinausragen, damit sie sich vollständig innerhalb der Durchbrechungen befinden. Etwaige Hohlräume 1130, die sich im assemblierten Zustand zwischen den elektronischen Bauelementen und der Stützstrukturlage ausbilden, weil die Durchbrechungen größer ausgebildet sind als die Bauelemente, werden nach dem Assemblieren dieser beiden Dokumentenlagen mit einem Polymer ausgefüllt, beispielsweise mit einem thermoplastischen Polymer (nicht dargestellt). Oder die Hohlräume werden mit dem zum Fügen der Dokumentenlagen verwendeten Klebemittel ausgefüllt. Durch diesen Aufbau werden die elektronischen Bauelemente gegen äußere mechanische Einflüsse geschützt.

Die Schaltungsträgerlage 1230 ist ebenso wie die Stützstrukturlage 1100 vorzugsweise aus FR4-Material hergestellt, kann aber auch aus einem anderen Verbundwerkstoff bestehen. Sie bildet zusammen mit der elektronischen Schaltung 1270 die Schaltungslage 1200. Die Schaltungsträgerlage weist Durchbrechungen 1260 auf, die mit einem Stanzvorgang hergestellt sein können. Derartige Durchbrechungen sind für die zweite Ausführungsform der ID-Karte 1000 in Fig. 2B gezeigt, in der die hierfür vorgesehenen Schaltungslage 1200 gezeigt ist. Diese Durchbrechungen befinden sich jedoch bevorzugt auch in der Schaltungsträgerlage der ersten Ausführungsform. Sie dienen dazu, eine Abschlusslage 1400 über den auf die Stützstrukturlage aufgebrachten Klebstoff direkt mit dieser zu verbinden.

Die Decklage 1300 schließt den Lagenstapel aus Stützstrukturlage 1100 und Schaltungslage 1200 zu der oberen Sichtseite 1010 der ID-Karte 1000 hin ab. Zu einer unteren Sichtseite 1020 werden die Stützstrukturlage und die Schaltungslage durch die Abschlusslage 1400 hin abgeschlossen. Die Abschlusslage ist wie die Decklage vorzugsweise opak und weist hierzu an einer zum Karteninneren weisenden Oberfläche eine Bedruckung 1410 auf, beispielsweise einen Sicherheitsdruck, damit die dahinter liegenden Strukturen der Karte verborgen werden. In diesem Falle kann die Abschlusslage aus einem transparenten Polymermaterial, beispielsweise aus transparentem Polycarbonat, gebildet sein. Alternativ kann die Abschlusslage auch aus einem opaken Material hergestellt sein. Bezüglich der Art des Sicherheitsdruckes gilt das zur Decklage Ausgeführte auch für die Abschlusslage entsprechend.

Die Decklage 1300 und die Abschlusslage 1400 sind größer als die Stützstrukturlage 1100 und die Schaltungslage 1200. Dadurch können die Materialien der Decklage und der Abschlusslage randseitig aneinander anliegen und verschmelzen beim Fügeprozess randseitig miteinander. Dadurch werden die Stützstrukturlage und die Schaltungslage zwischen diesen beiden äußeren Lagen eingeschlossen und damit gegen Manipulation und mechanische und andere Einflüsse geschützt.

Zum Fügen der einzelnen Dokumentenlagen 1100, 1200, 1300, 1400 miteinander kann ein Klebstoff verwendet werden, mit dem aneinander anliegende Dokumentenlagen miteinander verklebt werden. Hierzu wird vorzugsweise ein latent-reaktiver Klebstoff verwendet. Der Klebstoff wird flächig beispielsweise auf die beiden Oberflächen der Stützstrukturlage 1100 sowie die zum Karteninneren weisende Oberfläche der Abschlusslage 1400 aufgetragen.

Nach dem Assemblieren der Decklage 1300, der Stützstrukturlage 1100, die beidseitig mit dem Klebstoff versehen ist, ferner der Schaltungslage 1200 und der Abschlusslage 1400 werden die Lagen miteinander gefügt. Hierzu kann ein herkömmliches Laminierverfahren eingesetzt werden, bei dem die Dokumentenlagen unter Einwirkung von Wärme und Aufbringung von flächigem Druck miteinander verklebt werden. Die randseitig in unmittelbare Berührung miteinander kommenden Oberflächen der Decklage und der Abschlusslage können unter den angewendeten Laminierbedingungen gegebenenfalls anschmelzen, sodass eine monolithische Verbindung zwischen diesen beiden Lagen erzeugt wird und eine Grenzfläche zwischen den beiden Lagen nach dem Fügevorgang nicht mehr erkennbar ist, allenfalls noch durch den vorher aufgetragenen Klebstoff, wenn die beiden Lagen durch dasselbe Material gebildet sind.

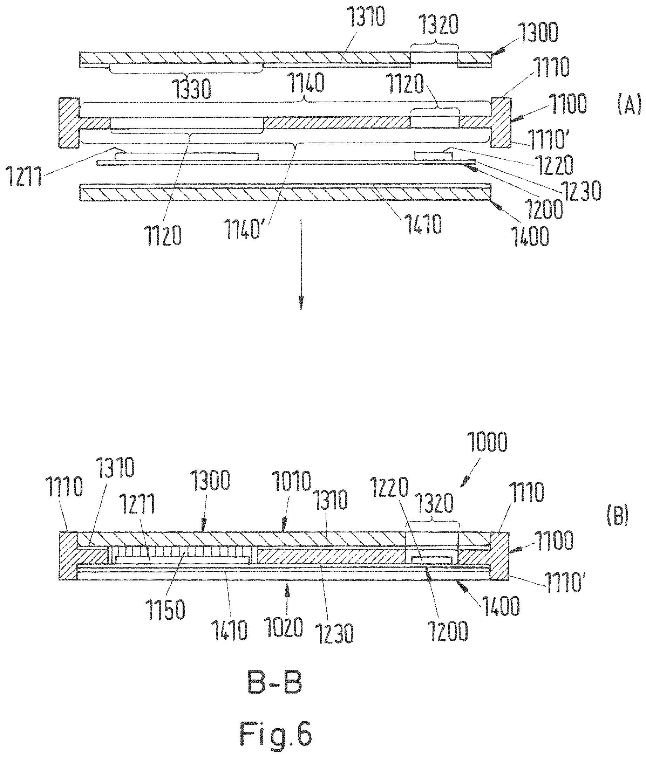

Fig. 1B, 6B zeigen eine zweite Ausführungsform der ID-Karte 1000 in assembliertem und gefügtem Zustand (Fig. 6A). In Fig. 2A, 2B, 6A sind die Dokumentenlagen 1100, 1200, 1300, 1400 in noch nicht assembliertem und gefügtem Zustand gezeigt. In dieser Ausführungsform ist die innen liegende Stützstrukturlage 1100 über ihren außenseitigen umlaufenden oberen Steg 1110 und unteren Steg 1110' von außen erkennbar. Ansonsten ist wie bezüglich der ersten Ausführungsform (Fig. 1A) von der in Fig. 1B gezeigten Oberseite der Karte lediglich die Decklage 1300 sichtbar, die alle anderen Dokumentenlagen und die elektronische Schaltung darunter verbirgt. Denn wie bei der ersten Ausführungsform weist die Decklage eine an der nach innen weisenden Oberfläche liegende Bedruckung 1310, beispielsweise in Form eines Sicherheitsdruckes, auf, die die darunter liegenden Strukturen der Karte nach außen visuell abschirmt. Alternativ kann die Decklage auch beispielsweise mit Pigmenten durchgefärbt und daher opak sein. Der Sicherheitsdruck kann beispielsweise individualisierende Kennzeichen, insbesondere personalisierende Kennzeichen, enthalten, beispielsweise ein Gesichtsbild in Form eines Fotos des Karteninhabers, und/oder in alphanumerischem Format ausgebildete Informationen, beispielsweise den Namen, den Geburtstag, -ort und/oder die Adresse des Karteninhabers und/oder eine Karten-Seriennummer, und/oder gegebenenfalls auch nichtindividualisierende Kennzeichen, wie einen Guillochendruck, Logos, Embleme, Siegel, Wappen, Motive und dergleichen. In die Decklage ist eine Durchbrechung 1320 eingebracht, durch die der biometrische Sensor 1220 nach außen hin freiliegt und daher zum Gebrauch der Karte berührt werden kann. Ferner ist die Bedruckung im Bereich 1330 unterbrochen. Damit das Anzeigeelement 1211 durch dieses Durchsichtsfenster von außen sichtbar ist, ist die Decklage aus einem transparenten Material, beispielsweise aus transparentem Polycarbonat, ausgebildet. Falls die Decklage durchgefärbt und daher auch schon ohne Bedruckung opak ist, muss sie oberhalb des Anzeigeelements eine Durchbrechung aufweisen, damit dieses von außen sichtbar ist.

Die Decklage ist in die obere Ausnehmung 1140 in der Stützstrukturlage 1100 eingelegt und schließt mit der Oberseite des umlaufenden oberen Steges 1110 bündig ab. Dieser Steg ist an drei Seiten jeweils in gleicher Breite verlaufend ausgeführt. Lediglich an der vierten Seite (an der oberen Seite der ID-Karte 1000) ist im Bereich des Steges ein durchgehendes Langloch 1111 in die Stützstrukturlage eingebracht, durch das beispielsweise ein Lanyard (Tragband) hindurch gestreckt werden kann, sodass die Karte von ihrem Inhaber getragen werden kann.

Die Stützstrukturlage 1100 ist vorzugsweise aus FR4-Material hergestellt. Es kann aber auch ein anderer Verbundwerkstoff verwendet werden. Die Stützstrukturlage weist im Bereich der elektronischen Bauelemente 1210, 1220, 1250 Durchbrechungen 1120 auf, die beispielsweise mit einem Stanzverfahren in die Lage eingebracht sind. Die Bauelemente ragen nach dem Assemblieren der Schaltungslage 1200 mit der Stützstrukturlage in die Durchbrechungen hinein. Vorzugsweise entspricht die Dicke der Stützstrukturlage ungefähr der Höhe der Bauelemente über der Schaltungsträgerlage 1230, sodass die Bauelemente ungefähr mit der Oberfläche der Stützstrukturlage in der Ausnehmung 1140 bündig abschließen, die der Schaltungslage gegenüber liegt. Jedenfalls sollen die Bauelemente nicht über diese Oberfläche hinausragen, damit sie sich vollständig innerhalb der Durchbrechungen befinden. Etwaige Hohlräume, die sich im assemblierten Zustand zwischen den elektronischen Bauelementen und dem Material der Stützstrukturlage ausbilden, weil die Durchbrechungen größer ausgebildet sind als die Bauelemente, werden nach dem Assemblieren dieser beiden Dokumentenlagen mit einem Polymer 1150 ausgefüllt, beispielsweise mit einem thermoplastischen Polymer. Dieses Polymer ist zumindest dort, wo es zum Verfüllen des Hohlraumes im Bereich des Anzeigeelements 1211 dient, transparent und vorzugsweise farblos, damit ein Betrachter die Anzeige problemlos wahrnehmen kann. Oder die Hohlräume werden bei einer nicht beanspruchten Ausführungsform mit dem zum Fügen der Dokumentenlagen verwendeten Klebstoff ausgefüllt. Durch diesen Aufbau werden die elektronischen Bauelemente gegen äußere mechanische Einflüsse geschützt.

Die Schaltungsträgerlage 1230 ist ebenso wie die Stützstrukturlage 1100 vorzugsweise aus FR4-Material hergestellt, kann aber auch aus einem anderen Verbundwerkstoff bestehen. Sie weist Durchbrechungen 1260 auf, die mit einem Stanzvorgang hergestellt sein können. Derartige Durchbrechungen dienen dazu, eine Abschlusslage 1400 über den auf die Stützstrukturlage aufgebrachten Klebstoff direkt mit dieser zu verbinden.

Die Decklage 1300 schließt den Lagenstapel aus Stützstrukturlage 1100 und Schaltungslage 1200 zu einer oberen Sichtseite 1010 der ID-Karte 1000 hin ab. Zur unteren Sichtseite 1020 hin werden die Stützstrukturlage 1100 und die Schaltungslage 1200 durch die Abschlusslage 1400 abgeschlossen. Die Abschlusslage ist wie die Decklage 1300 vorzugsweise opak und weist hierzu an einer zum Karteninneren weisenden Oberfläche eine Bedruckung 1410 auf, beispielsweise einen Sicherheitsdruck, damit die dahinter liegenden Strukturen der Karte verborgen werden. In diesem Falle kann die Abschlusslage aus einem transparenten Polymermaterial, beispielsweise aus transparentem Polycarbonat, gebildet sein. Alternativ kann die Abschlusslage auch aus einem opaken Material hergestellt sein. Bezüglich der Art des Sicherheitsdruckes gilt das zur Decklage Ausgeführte auch für die Abschlusslage entsprechend.

Die Stützstrukturlage 1100 weist nicht nur zur oberen Sichtseite 1010 der ID-Karte 1000 eine (obere) Ausnehmung 1140 auf sondern vorzugsweise auch eine untere Ausnehmung 1140` zur unteren Sichtseite 1020. Dadurch sind randseitig sowohl zur oberen Sichtseite als auch zur unteren Sichtseite hin Stege 1110, 1110' ausgebildet, die die Ausnehmungen randseitig begrenzen. Vorzugsweise hat der Querschnitt auch des unteren Steges 1110' über die gesamte Länge eine rechteckige Form. Die Schaltungsträgerlage 1230 ist vorzugsweise genauso groß wie die untere Ausnehmung und ist vorzugsweise passergenau, d.h. spielfrei, in diese Ausnehmung einpassbar.

Sowohl die Decklage 1300 als auch die Abschlusslage 1400 können parallel zu ihrer Hauptebene größer als die Ausnehmungen 1140, 1140' in der Stützstrukturlage 1100 sein und zwar genauso groß wie die Stützstrukturlage, wobei es auch denkbar ist, dass nur eine dieser beiden Lagen größer ist. Oder diese beiden Lagen 1300, 1400 können genauso groß sein wie die entsprechenden Ausnehmungen. In diesem Falle können sie in die jeweilige Ausnehmung vorzugsweise passergenau einpassbar sein. Zumindest dann wenn die Schaltungsträgerlage 1230 eine Dicke hat, die geringer ist als die Tiefe der unteren Ausnehmung 1140', kann zusätzlich auch die Abschlusslage in diese Ausnehmung eingepasst werden. Vorzugsweise ist die Summe der Dicken der Schaltungsträgerlage und der Abschlusslage genauso groß wie die Tiefe der unteren Ausnehmung, sodass die Abschlusslage mit dem unteren Steg nach außen hin bündig abschließt.

Zum Fügen der einzelnen Dokumentenlagen 1100, 1200, 1300, 1400 miteinander kann ein Klebstoff verwendet werden, mit dem aneinander anliegende Dokumentenlagen miteinander verklebt werden. Hierzu wird vorzugsweise ein latent-reaktiver Klebstoff verwendet. Der Klebstoff wird flächig beispielsweise auf die beiden Oberflächen der Stützstrukturlage 1100 und gegebenenfalls auch auf die zum Karteninneren weisende Oberfläche der Abschlusslage 1400 aufgetragen.

Nach dem Assemblieren der Decklage 1300, der Stützstrukturlage 1100, die beidseitig mit dem Klebstoff versehen ist, ferner der Schaltungslage 1200 und der Abschlusslage 1400 werden die Lagen miteinander gefügt. Hierzu kann ein herkömmliches Laminierverfahren eingesetzt werden, bei dem die Dokumentenlagen unter Einwirkung von Wärme und Aufbringung von flächigem Druck miteinander verklebt werden.

Das vorstehend beschriebene Laminierverfahren zum Herstellen der ID-Karte 1000 stellt eine erste Ausführungsvariante des Herstellverfahrens dar.

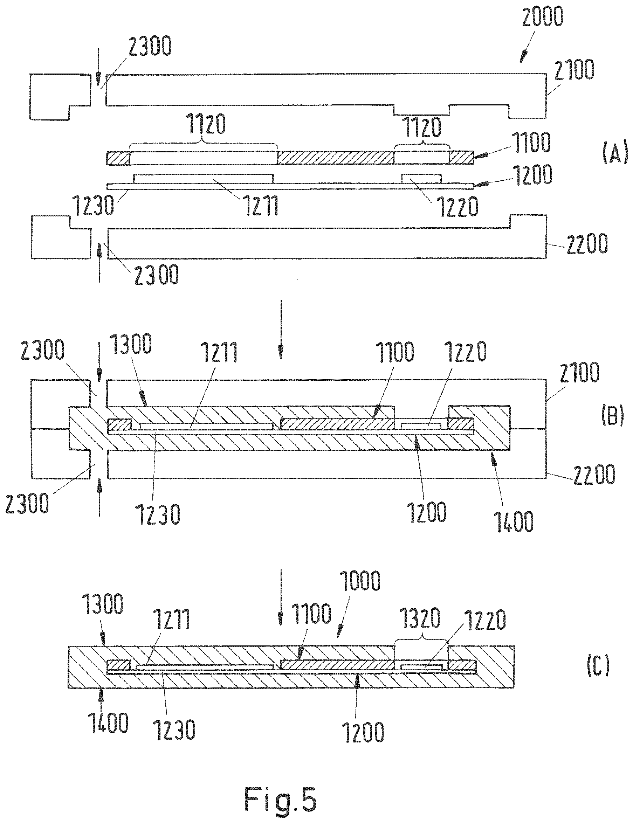

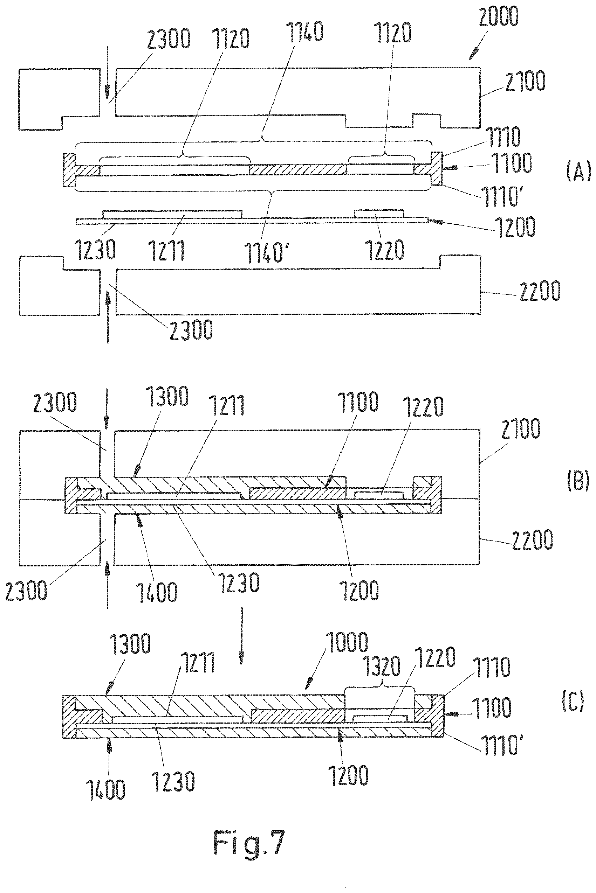

Die ID-Karte 1000 kann darüber hinaus in einer zweiten Herstellvariante auch mit einem Spritzgussverfahren hergestellt werden, wobei einzelne Lagen der ID-Karte gebildet werden. Hierzu werden die Stützstrukturlage 1100 und die Schaltungslage 1200 wie im Falle der ersten Herstellvariante zusammengestapelt und vorzugsweise miteinander verklebt, beispielsweise mit einem Cyanacrylat-basierten Klebstoff, und dann mit geschmolzenem Polymermaterial (geschmolzenem Granulat) mit dem Spritzgussverfahren umspritzt, sodass die obere Decklage 1300 und die untere Abschlusslage 1400 gebildet werden. Diese Verfahrensvariante ist für die erste und die zweite Ausführungsform der erfindungsgemäßen ID-Karte 1000 in Fig. 5, 7 gezeigt:
Fig. 5 zeigt die Verfahrensschritte zur Herstellung der ID-Karte 1000 in der ersten Ausführungsform nach der zweiten Verfahrensvariante. Bezüglich des Aufbaus der Kartenbestandteile und der fertig gestellten Karte wird auf Fig. 1A, 3, 4 verwiesen.

Zunächst werden die Stützstrukturlage 1100 und die Schaltungslage 1200 zur Verfügung gestellt und zu einem Stapel assembliert, sodass die elektronischen Bauelemente 1210, 1220, 1250 in die Durchbrechungen 1120 in der Stützstrukturlage hineinragen. Die beiden Lagen werden miteinander verklebt. Dieser Stapel wird dann in einem Spritzguss-Werkzeug 2000, bestehend aus einem oberen Formwerkzeug 2100 und einem unteren Formwerkzeug 2200, platziert (Fig. 5A).

Nach dem Schließen des Spritzguss-Werkzeuges 2000 befinden sich oberhalb und unterhalb des Stapels schicht-/lagenförmige Hohlräume zwischen den Formwerkzeugen 2100, 2200 und dem Stapel. In diese Hohlräume wird in üblicher Weise unter erhöhter Temperatur über Einspritzkanäle 2300 geschmolzenes Polymermaterial von außen eingepresst, sodass es diese Hohlräume ausfüllt (Fig. 5B). Dabei entstehen oberhalb des Stapels eine Decklage 1300 und unterhalb des Stapels eine Abschlusslage 1400. Da die Formwerkzeuge innen so ausgeformt sind, dass sie auch in der Stapelebene größer sind als der Stapel, umschließt das Polymermaterial den Stapel auch in diesem Bereich. Wenn die Materialien der Decklage und der Abschlusslage gleich sind, bildet sich keine Grenzfläche zwischen den beiden Lagen aus. Ferner dringt das Polymermaterial auch in einige der durch die Durchbrechungen 1120 in der Stützstrukturlage gebildeten Hohlräume ein und füllt diese aus, sodass die darin befindlichen elektronischen Bauelemente 1210, 1250 von dem Polymermaterial einseitig eingeschlossen werden. Dies gilt allerdings nicht für die Durchbrechung, in die der biometrische Sensor 1220 hineinragt, da an dieser Stelle eine Durchbrechung 1320 in der Decklage oberhalb dieses elektronischen Bauelements gebildet werden soll. Das obere Formwerkzeug 2100 verhindert in diesem Falle, dass das geschmolzene Polymermaterial den Bereich oberhalb dieses Bauelements ausfüllt. Das eingespritzte Polymermaterial ist wie im Falle der ersten Verfahrensvariante vorzugsweise transparent und gegebenenfalls auch farblos, sodass die darunter befindlichen Strukturen zunächst sichtbar sind. Es besteht vorzugsweise aus Polycarbonat.

Nach dem Erstarren des eingespritzten Polymermaterials wird die hergestellte ID-Karte 1000 ausgeworfen (Fig. 5C). Das sich oberhalb und unterhalb des durch die Stützstrukturlage 1100 und die Schaltungslage 1200 gebildeten Stapels befindende Polymer bildet die Decklage 1300 bzw. die Abschlusslage 1400. In der Decklage befindet sich eine Durchbrechung 1320 oberhalb des biometrischen Sensors 1220. Auf diese beiden Lagen wird außenseitig vorzugsweise ein Sicherheitsdruck aufgebracht (nicht dargestellt). Dieser kann mit einer mit Polycarbonat kompatiblen Druckfarbe erzeugt werden, beispielsweise einer Druckfarbe auf Polycarbonat-Basis. Der Druck kann individualisierend, insbesondere personalisierend, sein. Von daher ist es vorteilhaft, wenn das Druckverfahren ein digitales Druckverfahren ist, beispielsweise ein Inkjet-Druckverfahren. Dieser Druck kann schließlich durch einen nachträglich aufgebrachten transparenten und vorzugsweise farblosen Schutzlack geschützt werden.

In entsprechender Weise kann auch die ID-Karte 1000 in der zweiten Ausführungsform mit einem Spritzgussverfahren hergestellt werden. Hierzu wird auf Fig. 7 verwiesen. Bezüglich des Aufbaus der Kartenbestandteile und der fertig gestellten Karte wird auf Fig. 1B, 2, 3, 5 verwiesen.

Wiederum werden zunächst die Stützstrukturlage 1100 und die Schaltungslage 1200 zur Verfügung gestellt und assembliert, sodass die elektronischen Bauelemente 1210, 1220, 1250 in die Durchbrechungen 1120 in der Stützstrukturlage hineinragen. Beim Assemblieren werden diese beiden Lagen vorzugsweise miteinander verklebt, beispielsweise mit einem Cyanacrylat-basierten Klebstoff. Dieser Stapel wird dann in einem Spritzguss-Werkzeug 2000, bestehend aus einem oberen Formwerkzeug 2100 und einem unteren Formwerkzeug 2200, platziert (Fig. 7A).

Nach dem Schließen des Spritzguss-Werkzeuges 2000 befinden sich oberhalb und unterhalb des Stapels schicht-/lagenförmige Hohlräume zwischen den Formwerkzeugen 2100, 2200 und dem Stapel. In diese Hohlräume wird in üblicher Weise unter erhöhter Temperatur über Einspritzkanäle 2300 geschmolzenes Polymermaterial von außen eingepresst, sodass es diese Hohlräume ausfüllt (Fig. 7B). Dabei entstehen oberhalb des Stapels eine Decklage 1300 und unterhalb des Stapels eine Abschlusslage 1400 innerhalb der Ausnehmungen 1140, 1140' der Stützstrukturlage 1100. Ferner dringt das Polymermaterial auch in einige der durch die Durchbrechungen 1120 in der Stützstrukturlage gebildeten Hohlräume ein und füllt diese aus, sodass die darin befindlichen elektronischen Bauelemente 1210, 1250 von dem Polymermaterial einseitig eingeschlossen werden. Dies gilt allerdings nicht für die Durchbrechung, in die der biometrische Sensor 1220 hineinragt, da an dieser Stelle eine Durchbrechung 1320 in der Decklage oberhalb dieses elektronischen Bauelements gebildet werden soll. Das obere Formwerkzeug 2100 verhindert in diesem Falle, dass das geschmolzene Polymermaterial den Bereich oberhalb dieses Bauelements ausfüllt. Das eingespritzte Polymermaterial ist wie im Falle der ersten Verfahrensvariante vorzugsweise transparent und gegebenenfalls auch farblos, sodass die darunter befindlichen Strukturen zunächst sichtbar sind. Es besteht vorzugsweise aus Polycarbonat.

Nach dem Erstarren des eingespritzten Polymermaterials wird die hergestellte ID-Karte 1000 ausgeworfen (Fig. 7C). Das sich oberhalb und unterhalb des durch die Stützstrukturlage 1100 und die Schaltungslage 1200 gebildeten Stapels befindende Polymer bildet die Decklage 1300 bzw. die Abschlusslage 1400. In der Decklage befindet sich eine Durchbrechung 1320 oberhalb des biometrischen Sensors 1220. Auf diese beiden Lagen wird außenseitig vorzugsweise ein Sicherheitsdruck aufgebracht (nicht dargestellt). Dieser kann mit einer mit Polycarbonat kompatiblen Druckfarbe erzeugt werden, beispielsweise einer Druckfarbe auf Polycarbonat-Basis. Der Druck kann individualisierend, insbesondere personalisierend, sein. Von daher ist es vorteilhaft, wenn das Druckverfahren ein digitales Druckverfahren ist, beispielsweise ein Inkjet-Druckverfahren. Dieser Druck kann schließlich durch einen nachträglich aufgebrachten transparenten und vorzugsweise farblosen Schutzlack geschützt werden.

In Fig. 8 ist schließlich noch eine dritte Ausführungsform der erfindungsgemäßen ID-Karte 1000 in noch nicht assembliertem Zustand (Fig. 8A) und assembliertem und gefügtem Zustand (Fig. 8B) dargestellt. Die einzelnen Elemente dieser Karte entsprechen denen der ersten und der zweiten Ausführungsform. Insofern wird auch auf die Beschreibung dieser Ausführungsformen verwiesen.

Ausgehend von der zweiten Ausführungsform der erfindungsgemäßen ID-Karte 1000 unterscheidet sich die dritte Ausführungsform von dieser dadurch, dass zusätzlich zu der Decklage 1300, der Stützstrukturlage 1100, der Schaltungslage 1200 und der Abschlusslage 1400 an der oberen Sichtseite 1010 eine obere Schutzlage 1500 mit einer Durchbrechung 1510 und an der unteren Sichtseite 1020 eine untere Schutzlage 1600 angeordnet sind. Die obere und die untere Schutzlage sind vorzugsweise wiederum aus einem transparenten Polymermaterial hergestellt, beispielsweise aus transparentem Polycarbonat. Diese beiden Schutzlagen erstrecken sich über die gesamte Oberfläche der ID-Karte und decken daher auch die Stege 1110, 1110` der Stützstrukturlage 1100 ab. Von daher hat diese Karte das Aussehen gemäß Fig. 1A, obwohl die Stützstrukturlage zur Aufnahme der Schaltungslage 1200 und der Decklage 1300 obere und untere Ausnehmungen 1140, 1140' aufweist.

Da diese beiden Schutzlagen 1500, 1600 die ID-Karte 1000 nach außen abschließen, können Bedruckungen auf der Decklage 1300 und der Abschlusslage 1400 außen aufgebracht sein, weil sie durch die Schutzlagen geschützt sind.

Die ID-Karte 1000 in dieser dritten Ausführungsform kann entweder mit dem vorstehend beschriebenen Verfahren in der ersten Verfahrensvariante aus Folien oder mit dem vorstehend beschriebenen Verfahren in der zweiten Verfahrensvariante mit einem Spritzgussverfahren hergestellt werden. Fig. 8 zeigt die Herstellung aus Folien. Für eine Herstellung mittels Spritzgussverfahren können die beiden Schutzlagen 1500, 1600 beispielsweise in das Spritzguss-Werkzeug 2000 eingelegt werden, sodass sie schließlich außenseitig an dem gebildeten Lagenstapel angeordnet sind. Der Verbund aus Stützstrukturlage 1100, Schaltungslage 1200, Decklage 1300 und Abschlusslage 1400 kann wie im Falle der zweiten Ausführungsform der ID-Karte 1000 mit dem Verfahren gemäß der zweiten Verfahrensvariante (Fig. 7) hergestellt werden. Beim Spritzgussverfahren verbinden sich dann die außenseitig eingelegten Schutzlagen mit dem geschmolzenen Polymermaterial und bilden die Außenlagen der ID-Karte.

### Bezugszeichenliste:

- 1000: Wert- oder Sicherheitsdokument, ID-Karte
- 1010: obere Sichtseite
- 1020: untere Sichtseite
- 1100: Stützstrukturlage, Dokumentenlage
- 1110: (oberer) Steg
- 1110': unterer Steg
- 1111: Langloch
- 1120: Durchbrechung
- 1130: Hohlraum
- 1140: (obere) Ausnehmung
- 1140`: untere Ausnehmung
- 1150: Polymerfüllung, Polymermaterial
- 1200: Schaltungslage, Dokumentenlage
- 1210: Anzeigevorrichtung, elektronisches Halbleiterbauelement
- 1211: Anzeigeelement
- 1220: biometrischer Sensor, Fingerabdruckscan-Vorrichtung, elektronisches Halbleiterbauelement
- 1230: Schaltungsträgerlage
- 1240: RFID-Schaltung
- 1241: RFID-IC
- 1242: RFID-Antenne
- 1250: zentraler Prozessor, elektronisches Halbleiterbauelement
- 1260: Durchbrechung
- 1270: elektronische Schaltung
- 1300: Decklage, Deckfolie, Dokumentenlage
- 1310: Bedruckung
- 1320: Durchbrechung
- 1330: unterbrochener Bereich der Bedruckung, Durchsichtsfenster
- 1400: Abschlusslage, Abschlussfolie, Dokumentenlage
- 1410: Bedruckung
- 1500: obere Schutzlage
- 1510: Durchbrechung
- 1600: untere Schutzlage
- 2000: Spritzguss-Werkzeug
- 2100: oberes Formwerkzeug
- 2200: unteres Formwerkzeug
- 2300: Einspritzkanal

## Patentansprüche

1. Wert- oder Sicherheitsdokument (1000) mit einer elektronischen Schaltung (1270), wobei das Wert- oder Sicherheitsdokument (1000) aus mindestens zwei in einem Stapel angeordneten und mit einem Fügeverfahren miteinander verbundenen Dokumentenlagen (1100, 1200, 1300, 1400) gebildet ist, wobei eine Dokumentenlage durch eine Stützstrukturlage (1100) und eine weitere Dokumentenlage durch eine die elektronische Schaltung (1270) tragende Schaltungsträgerlage (1230) gebildet sind, wobei die Stützstrukturlage (1100) aus einem Faserverbundwerkstoff gebildet ist, wobei zumindest an einer Seite der Schaltungsträgerlage (1230) mindestens ein elektronisches Halbleiterbauelement (1210, 1220, 1250) angeordnet ist und wobei die Stützstrukturlage (1100) im Bereich des mindestens einen elektronischen Halbleiterbauelements (1210, 1220, 1250) mindestens eine Durchbrechung (1120) aufweist, sodass das mindestens eine elektronische Halbleiterbauelement (1210, 1220, 1250) in einem gefügten Zustand von jeweils einer Durchbrechung (1120) vollständig in der Stützstrukturlage (1100) aufgenommen ist, **dadurch gekennzeichnet, dass** Hohlräume (1130),die durch die mindestens eine Durchbrechung (1120) und die elektronischen Halbleiterbauelemente (1210, 1220, 1250) gebildet sind, mit einem Polymermaterial (1150) gefüllt sind.

2. Wert- oder Sicherheitsdokument (1000) nach Anspruch 1, **dadurch gekennzeichnet, dass** die Schaltungsträgerlage (1230) aus einem Faserverbundwerkstoff gebildet ist.

3. Wert- oder Sicherheitsdokument (1000) nach einem der vorstehenden Ansprüche, **dadurch gekennzeichnet, dass** der Faserverbundwerkstoff nicht schmelzend ist.

4. Wert- oder Sicherheitsdokument (1000) nach einem der vorstehenden Ansprüche, **dadurch gekennzeichnet, dass** der Faserverbundwerkstoff der Stützstrukturlage (1100) aus einem mit Glasfasergewebe verstärkten Duroplast auf der Basis eines Epoxidharzes gebildet ist.

5. Wert- oder Sicherheitsdokument (1000) nach einem der vorstehenden Ansprüche, **dadurch gekennzeichnet, dass** die Stützstrukturlage (1100) zumindest an einer Seite eine Ausnehmung (1140, 1140') zur passergenauen Aufnahme der Schaltungsträgerlage (1230) mit der mindestens einen von dieser getragenen elektronischen Schaltung (1270) aufweist.

6. Wert- oder Sicherheitsdokument (1000) nach einem der vorstehenden Ansprüche, **dadurch gekennzeichnet, dass** das Fügeverfahren ein Klebeverfahren ist.

7. Wert- oder Sicherheitsdokument (1000) nach einem der vorstehenden Ansprüche, **dadurch gekennzeichnet, dass** die Stützstrukturlage (1100) zumindest an einer Seite eine Ausnehmung (1140) zur passergenauen Aufnahme einer Decklage (1300) aufweist.

8. Wert- oder Sicherheitsdokument (1000) nach einem der vorstehenden Ansprüche, **dadurch gekennzeichnet, dass** die elektronische Schaltung (1270) eine RFID-Schaltung (1240), eine Fingerabdruckscan-Vorrichtung (1220) und eine Anzeigevorrichtung (1210) umfasst.

9. Wert- oder Sicherheitsdokument (1000) nach einem der Ansprüche 2 bis 8, **dadurch gekennzeichnet, dass** die Schaltungsträgerlage (1230) Durchbrechungen (1260) aufweist, die einen Durchtritt von Klebemittel erlauben.

10. Verfahren zum Herstellen eines eine elektronische Schaltung (1270) aufweisenden Wert- oder Sicherheitsdokuments (1000), umfassend die folgenden Verfahrensschritte:
(a) Bereitstellen einer aus einem Faserverbundwerkstoff gebildeten Stützstrukturlage (1100) und einer die elektronische Schaltung (1270) tragenden Schaltungsträgerlage (1230), wobei zumindest an einer Seite der Schaltungsträgerlage (1230) mindestens ein elektronisches Halbleiterbauelement (1210, 1220, 1250) angeordnet ist;
(b) Aufeinanderstapeln der Stützstrukturlage (1100) und der die elektronische Schaltung (1270) tragenden Schaltungsträgerlage (1230); und
(c) Verbinden der Stützstrukturlage (1100) und der Schaltungsträgerlage (1230) mit einem Fügeverfahren,,
wobei die Stützstrukturlage (1100) im Bereich des mindestens einen elektronischen Halbleiterbauelements (1210, 1220, 1250) mindestens eine Durchbrechung (1120) aufweist, sodass das mindestens eine elektronische Halbleiterbauelement (1210, 1220, 1250) in einem gefügten Zustand von jeweils einer Durchbrechung (1120) vollständig in der Stützstrukturlage (1100) aufgenommen ist, **dadurch gekennzeichnet, dass** Hohlräume (1130),die durch die mindestens eine Durchbrechung (1120) und die elektronischen Halbleiterbauelemente (1210, 1220, 1250) gebildet sind, mit einem Polymermaterial (1150) gefüllt werden.

11. Verfahren nach Anspruch 10, **dadurch gekennzeichnet, dass** die Stützstrukturlage (1100) und die Schaltungslage (1200) mit einer Deckfolie (1300) und einer Abschlussfolie (1400) mit einem Fügeverfahren verbunden werden.

12. Verfahren nach Anspruch 10, **dadurch gekennzeichnet, dass** der Stapel aus Stützstrukturlage (1100) und Schaltungslage (1200) in einem Spritzgussverfahren mit dem Polymermaterial umspritzt werden, sodass an einer Seite des Stapels eine Decklage (1300) und an einer anderen Seite des Stapels eine Abschlusslage (1400) gebildet werden.

## Claims

1. A document of value or security document (1000) with an electronic circuit (1270), wherein the document of value or security document (1000) is formed from at least two document layers (1100, 1200, 1300, 1400) arranged in a stack and connected to one another by means of a joining process, wherein one document layer is formed by a supporting structure layer (1100) and a further document layer by a circuit carrier layer (1230) carrying the electronic circuit (1270),
wherein the supporting structure layer (1100) is formed from a fibre composite material, wherein at least one electronic semiconductor component (1210, 1220, 1250) is arranged at least on one side of the circuit carrier layer (1230), in that the supporting structure layer (1100) has at least one aperture (1120) in the area of the at least one semiconductor component (1210, 1220, 1250), such that the at least one electronic semiconductor component (1210, 1220, 1250) is received in a joined state by an aperture (1120) in the supporting structure layer (1100), **characterised in that** cavities (1130), which are formed by the at least one aperture (1120) and the electronic semiconductor components (1210, 1220, 1250), are filled with a polymer material (1150).

2. The document of value or security document (1000) according to claim 1, **characterised in that** the circuit carrier layer (1230) is formed from a fibre composite material.

3. The document of value or security document (1000) according to any one of the preceding claims, **characterised in that** the fibre composite material does not melt.

4. The document of value or security document (1000) according to any one of the preceding claims, **characterised in that** the fibre composite material of the supporting structure layer (1100) is formed from an epoxy resin-based thermoset reinforced with glass fibre fabric.

5. The document of value or security document (1000) according to any one of the preceding claims, **characterised in that** the supporting structure layer (1100) has a recess (1140, 1140'), at least on one side, in order to receive the circuit carrier layer (1230), with the at least one electronic circuit (1270) carried thereby, in an accurately fitting manner.

6. The document of value or security document (1000) according to any one of the preceding claims, **characterised in that** the joining process is an adhesive bonding process.

7. The document of value or security document (1000) according to any one of the preceding claims, **characterised in that** the supporting structure layer (1100) has, at least on one side, a recess (1140) for receiving a cover layer (1300) in an accurately fitting manner.

8. The document of value or security document (1000) according to any one of the preceding claims, **characterised in that** the electronic circuit (1270) comprises an RFID circuit (1240), a fingerprint scanner device (1220) and a display device (1210).

9. The document of value or security document (1000) according to any one of claims 2 to 8, **characterised in that** the circuit carrier layer (1230) has apertures (1260), which allow a passage of adhesive.

10. A method for producing a document of value or security document (1000) having an electronic circuit (1270), comprising the following method steps:
(a) providing a supporting structure layer (1100) formed from a fibre composite material and a circuit carrier layer (1230) carrying the electronic circuit (1270);
(b) stacking on top of one another the supporting structure layer (1100) and the circuit carrier layer (1230) carrying the electronic circuit (1270) , wherein at least one electronic semiconductor component (1210, 1220, 1250) is arranged at least on one side of the circuit carrier layer (1230); and
(c) connecting the supporting structure layer (1100) and the circuit carrier layer (1230) using a joining process,
**characterised in that** the supporting structure layer (1100) is formed from a fibre composite material, wherein the supporting structure layer (1100) has at least one aperture (1120) in the area of the at least one semiconductor component (1210, 1220, 1250), such that the at least one electronic semiconductor component (1210, 1220, 1250) is received in a joined state by an aperture (1120) in the supporting structure layer (1100), **characterised in that** cavities (1130), which are formed by the at least one aperture (1120) and the electronic semiconductor components (1210, 1220, 1250), are filled with a polymer material (1150).

11. The method according to claim 10, **characterised in that** the supporting structure layer (1100) and the circuit layer (1200) are connected to a cover film (1300) and a termination film (1400) using a joining process.

12. The method according to claim 10, **characterised in that** the stack formed of supporting structure layer (1100) and circuit layer (1200) are encapsulated with the polymer material in an injection moulding process, so that a cover layer (1300) is formed on one side of the stack and a termination layer (1400) is formed on another side of the stack.

## Revendications

1. Document de valeur ou de sécurité (1000) avec un circuit électronique (1270), le document valeur ou de sécurité (1000) comprenant au moins deux couches de document (1100 1200,1300, 1400), disposées en un empilement et reliées entre elles par un procédé d'assemblage, une couche de document étant formée par une couche de structure de support (1100) et une autre couche de document étant formée par une couche de support de circuit (1230) portant le circuit électronique (1270), la couche de structure de support (1100) étant formée d'un matériau composite à base de fibres, au moins un composant électronique à semi-conducteur (1210, 1270, 1230) étant disposé sur au moins un côté de la couche de support de circuit (1230), 1220, 1250) et la couche de structure de support (1100) présentant au moins un ajour (1120) dans la zone du au moins un composant électronique à semi-conducteur (1210, 1220, 1250), de sorte que le au moins un composant électronique à semi-conducteur (1210, 1220, 1250) est entièrement logé dans la couche de structure de support (1100) dans un état assemblé par un ajour (1120) respectif, **caractérisé en ce que** des espaces creux (1130),qui sont formés par l'au moins un ajour (1120) et les composants électroniques à semi-conducteurs (1210, 1220, 1250), sont remplis d'un matériau polymère (1150).

2. Document de valeur ou de sécurité (1000) selon la revendication 1, **caractérisé en ce que** la couche de support de circuit (1230) est formée d'un matériau composite à fibres.

3. Document de valeur ou de sécurité (1000) selon l'une des revendications précédentes, **caractérisé en ce que** le matériau composite fibreux est non fusible.

4. Document de valeur ou de sécurité (1000) selon l'une des revendications précédentes, **caractérisé en ce que** le matériau composite fibreux de la couche de structure de support (1100) est formé d'une résine thermodurcissable à base de résine époxy, renforcée par un tissu de fibres de verre.

5. Document de valeur ou de sécurité (1000) selon l'une des revendications précédentes, **caractérisé en ce que** la couche de structure de support (1100) présente, au moins sur un côté, un évidement (1140, 1140') destiné à recevoir de manière ajustée la couche de support de circuit (1230) avec le au moins un circuit électronique (1270) porté par celle-ci.

6. Document de valeur ou de sécurité (1000) selon l'une des revendications précédentes, **caractérisé en ce que** le procédé d'assemblage est un procédé de collage.

7. Document de valeur ou de sécurité (1000) selon l'une des revendications précédentes, **caractérisé en ce que** la couche de structure de support (1100) présente au moins sur un côté un évidement (1140) destiné à recevoir avec précision une couche de couverture (1300).

8. Document de valeur ou de sécurité (1000) selon l'une des revendications précédentes, **caractérisé en ce que** le circuit électronique (1270) comprend un circuit RFID (1240), un dispositif de balayage d'empreintes digitales (1220) et un dispositif d'affichage (1210).

9. Document de valeur ou de sécurité (1000) selon l'une des revendications 2 à 8, **caractérisé en ce que** la couche de support de circuit (1230) présente des ajours (1260) permettant le passage d'un adhésif.

10. Procédé de fabrication d'un document de valeur ou de sécurité (1000) présentant un circuit électronique (1270), comprenant les étapes de procédé suivantes :
(a) préparation d'une couche de structure de support (1100) formée d'un matériau composite à base de fibres et d'une couche de support de circuit (1230) portant le circuit électronique (1270), au moins un composant électronique à semi-conducteur (1210, 1220, 1250) étant disposé sur au moins un côté de la couche de support de circuit (1230) ;
(b) empiler la couche de structure de support (1100) et la couche de support de circuit (1230) portant le circuit électronique (1270) ; et
(c) assembler la couche de structure de support (1100) et la couche de support de circuit (1230) par un procédé d'assemblage,
la couche de structure de support (1100) présentant au moins un ajour (1120) dans la zone du au moins un composant électronique à semi-conducteur (1210, 1220, 1250), de sorte que le au moins un composant électronique à semi-conducteur (1210, 1220, 1250) est entièrement reçu dans la couche de structure de support (1100) dans un état assemblé par un ajour (1120) respective, **caractérisé en ce que** des espaces creux (1130),qui sont formés par l'au moins un ajour (1120) et les composants électroniques à semi-conducteurs (1210, 1220, 1250), sont remplis d'un matériau polymère (1150).

11. Procédé selon la revendication 10, **caractérisé en ce que** la couche de structure de support (1100) et la couche de circuit (1200) sont recouvertes d'un film de couverture (1300) et d'un film de cisaillement (1300).

12. Procédé selon la revendication 10, **caractérisé en ce que** l'empilement de la couche de structure de support (1100) et de la couche de circuit (1200) est surmoulé avec le matériau polymère dans un procédé de moulage par injection, de sorte qu'une couche de couverture (1300) est formée sur un côté de l'empilement et une couche de fermeture (1400) est formée sur un autre côté de l'empilement.
